# EUROPÄISCHE PATENTSCHRIFT

(11) **EP 0 644 134 B1**
(45) Veröffentlichungstag und Bekanntmachung des Hinweises auf die Patenterteilung: **05.11.1997**
(21) Anmeldenummer: 94116213.3
(22) Anmeldetag: 21.02.1992
(51) Int. Cl.: B65G 27/02, B65G 27/30

(54) **Vibrationswendelförderer**
Vibratory spiral conveyor
Transporteur hélicoidal à vibrations

(30) Priorität: 25.10.1991 DE 4135212; 27.11.1991 DE 4138957; 27.08.1991 DE 4128289; 25.10.1991 DE 4135211
(43) Veröffentlichungstag der Anmeldung: 22.03.1995
(62) Teilanmeldung aus: 92102906.2
(73) Patentinhaber: Kumeth, Siegmund, D-92224 Amberg (DE)
(72) Erfinder: Kumeth, Siegmund, D-92224 Amberg (DE); Krell, Helmut, D-98527 Suhl (DE)
(74) Vertreter: Graf, Helmut, Dipl.-Ing.

(56) Entgegenhaltungen:
- DE-B- 1 173 839
- FR-A- 2 369 983
- US-A- 3 528 541
- US-A- 3 915 292

## Beschreibung

Die Erfindung bezieht sich auf einen Vibrationswendelförderer gemäß Oberbegriff Patentanspruch 1.

Ein solcher Wendelförderer ist aus der DE-A-3 940 111 bekannt.

Ein als Vibrationslängsförderer ausgebildeter Förderer dieser Art ist grundsätzlich aus der DD-PS 257 737 bekannt.

Vibrationslängsförderer werden insbesondere bei automatischen Fertigungsprozessen, d. h. bei Fertigungs- oder Montageautomaten für die Speicherung und Weitergabe von Werkstücken oder Bauteilen, insbesondere auch Kleinstbauteilen verwendet. Das Förderelement ist bei diesen Vibrationslängsförderern in den meisten Fällen eine Förderrinne, die dann an einem ersten, der Nutzmasse zugeordneten Schwingelement des Schwingsystems befestigt ist.

Um eine Übertragung von Vibrationen auf einen Maschinentisch oder ein Maschinengestell, an dem der Vibrationslängsförderer vorgesehen ist, zu vermeiden und damit insbesondere auch Störungen anderer am Maschinentisch bzw. Maschinengestell ebenfalls vorgesehener Systeme durch solche Vibrationen zu vermeiden, ist bei dem Vibrationslängsförderer der eingangs genannten Art zusätzlich zur Nutzmasse ein eine Gegenmasse bildendes Schwingelement ebenfalls schwingend an einem Basiselement vorgesehen.

Durch den Antrieb, der von einer von einem sich in der Amplitude ändernden stromdurchflossenen Magnetspule mit Magnetkern und einem zugeordneten Magnetanker gebildet ist, werden die beiden Schwingelemente bzw. die Nutzmasse und Gegenmasse gegenläufig in Schwingung bzw. Vibration versetzt, und zwar die zumindest Teil der Nutzmasse bildende Förderrinne in der Weise, daß sie eine hin- und hergehende Bewegung jausführt mit einer größeren, sich in Längsrichtung der Rinne erstreckenden Bewegungskomponente und mit einer kleineren, in vertikaler Richtung verlaufenden Bewegungskomponente. Die Bauelemente werden durch diese Vibrationsbewegung in Längsrichtung der Förderrinne, d. h. in Förderrichtung bewegt werden. Damit durch die Verwendung der Nutzmasse und Gegenmasse keine Vibrationskräfte auf das Basiselement und über dieses auf den Maschinentisch oder dergleichen Maschinengestell übertragen werden, ist es notwendig, daß (auch unter Berücksichtigung der Federkonstanten der Federeinrichtungen bzw. -elemente) die Nutzmasse und die Gegenmasse hinsichtlich ihres Massengewichtes exakt aufeinander abgestimmt sind (Massenabgleich). Die Nutzmasse ist zu einem Großteil von der Masse des Förderelementes gebildet, welches an den jeweiligen Anwendungsfall angepaßt ist und dessen Masse somit von Anwendungsfall zu Anwendungsfall unterschiedlich sein kann.

Für den Massenabgleich zwischen Nutzmasse und Gegenmasse setzt der bekannte Vibrationslängsförderer eine entsprechende Bearbeitung des Förderelementes voraus, wofür es dann erforderlich ist, daß Förderelement vom Schwingsystem abzunehmen, zu bearbeiten und erneut am Schwingsystem zu montieren. Da der Vibrationslängsförderer und insbesondere dessen Förderelement mit weiteren Elementen eines Systems zusammenwirken, ist es auch erforderlich, nach jeder erneuten Montage des Förderelementes dieses wiederum exakt in bezug auf die übrigen Elemente des Systems neu zu justieren. Dieser Arbeitsaufwand ist dann besonders groß, wenn das Förderelement mehrfach demontiert, bearbeitet und anschließend wieder montiert werden muß, bis der optimale Massenabgleich erreicht ist.

Bekannt ist auch ein Vibrationsförderer in Form eines Vibrationswendelförderers (DE-OS 39 40 111). Dieser bekannte Förderer hat den grundsätzlichen Vorteil, daß durch die spezielle Ausbildung des Schwingsystems eine weitestgehende vibrationsfreie Anordnung möglich ist, d.h. bei eingeschaltetem Vibrationsförderer Schwingungen auf einem Maschinengestell oder Maschinentisch nicht übertragen werden, die (Schwingungen) andere Funktionselemente eines Systems, beispielsweise einer Montagestrecke stören könnten.

Nachteilig ist bei diesem bekannten Förderer u.a., daß insbes. das erste Schwingsystem fester Bestandteil eines Topfes ist, der betreffende Topf also nicht vom Schwingsystem abgenommen und/oder gegen einen anderen Topf ausgetauscht werden kann. Im bekannten Fall ist somit für jeden Topf, d.h. insbes. auf jede Topfgröße und Topfform ein ganz spezielles Schwingsystem vorgesehen.

Aufgabe der Erfindung ist es, einen Vibrationsförderer aufzuzeigen, der die vorgenannten Nachteile vermeidet, einen Massenabgleich bzw. ein Abgleich des Massenträgheitsmomentes einfach und ohne eine Demontage des Förderers oder des Förderelementes sowie eine flexiblere Verwendbarkeit ermöglicht.

Zur Lösung dieser Aufgabe ist ein Vibrationsförderer entsprechend dem kennzeichenden Teil des Patentanspruches 1 ausgebildet.

Bei der Erfindung erfolgt der Massenausgleich bzw. der Ausgleich der Trägheitsmomente zwischen der Nutzmasse und der Gegenmasse dadurch, daß nur die Federanordnungen, die der Nutzmasse zugeordnet sind, in ihrer Federkonstanten so an die jeweilige Masse des verwendeten Topfes angepaßt werden, daß sich für die Nutzmasse eine Eigenfrequenz ergibt, die gleich der Eigenfrequenz der Gegenmasse sowie auch gleich der Frequenz des Antriebes ist. Weiterhin ist bei der Erfindung das dynamische Trägheitsmoment der Gegenschwingmasse so gewählt, daß es gleich dem dynamischen Trägheitsmoment ist, welches die Nutzmasse dann aufweist, wenn der Topf mit der größten Masse verwendet ist.

Durch beide Maßnahmen ist erreicht, daß der Hub der Dreh-Schwing-Bewegung der Gegenmasse für alle vorgesehenen Nutzmassen auf keinen Fall den für eine ausreichende Förderwirkung oder Fördergeschwindigkeit notwendigen Hub der Nutzmasse überschreiteet.

Nach einem Aspekt der Erfindung bildet das zweite Schwingelement wenigstens einen Teilbereich, der senkrecht zur Förderrichtung seitlich von dem Förderelement und/oder von dem ersten Schwingelement vorgesehen ist und an dem Mittel zum Befestigen einer mit in die Gegenmasse eingehenden Masse gebildet sind.

Bei einer bevorzugten Ausführungsform der Erfindung ist an diesem Teilbereich eine in ihrer Größe veränderbare Hilfsmasse frei zugänglich vorgesehen. Mit dieser Hilfsmasse kann dann ein Massenabgleich bzw. eine Massenkompensation bei Verwendung von Förderelementen mit unterschiedlicher Masse erfolgen. "Frei zugänglich" im Sinne der Erfindung bedeutet dabei, daß diese Hilfsmasse oder auch andere Elemente, die als frei zugänglich bezeichnet sind, so vorgesehen sind, daß für eine Änderung, für eine Einstellung bzw. für einen Abgleich keine Demontage des Förderelementes oder anderer Funktionselemente des Schwingsystems notwendig sind, ausgenommen selbstverständlich solche Elemente, die die Hilfsmasse bilden. Hiermit ist es möglich, bei funktionsfähigen Vibrationsförderer, d.h. insbesondere bei montiertem Förderelement einen Massenabgleich durchzuführen.

Die jeweilige Hilfsmasse wird bei der Erfindung vorzugsweise von Einzelmassen gebildet, die entsprechend dem erforderlichen Massenabgleich entweder mit dem zweiten Schwingelement verbunden oder aber von diesem abgenommen werden. Damit bei einer vorgegebenen Änderung der Größe der Hilfsmasse ein Massenabgleich in einem möglichst großen Bereich erzielbar ist, ist bei dem erfindungsgemäßen Vibrationsförderer vorzugsweise dafür gesorgt, daß die Nutzmasse möglichst keine unnötigen Massenelemente aufweist, insbesondere auch das erste Schwingelement eine möglichst geringe Masse besitzt. Hierdurch ergibt sich dann eine relativ kleine Gegenmasse, so daß eine vorgegebene Änderung der Hilfsmasse eine relativ große Änderung der Gegenmasse insgesamt bewirken kann.

Bei einer Ausführung der Erfindung ist das zweite Schwingelement so ausgebildet, daß es beidseitig von dem Förderelement jeweils wenigstens einen Teilbereich zur Aufnahme jeweils wenigstens einer, frei zugänglichen Hilfsmasse aufweist.

Bei einer weiteren, bevorzugten Ausführungsform der Erfindung sind die beiden Schwingelemente beidseitig von einer die Förderrichtung einschließenden vertikalen Mittelebene voneinander beabstandet angeordnet. Bei an dem ersten Schwingelement bzw. auf dessen Oberseite befestigtem Förderelement bildet dann das zweite Schwingelement mit seiner Oberseite einen frei zugänglichen Bereich zum Befestigen der Hilfsmassen.

Bei dieser Auführung ist es auch möglich, daß bei einem geteilten Förderelement, z.B. bei einer geteilten Förderrinne ein Teil dieses Förderelementes an dem ersten Schwingelement und ein anderes Teil dieses Förderelementes an dem zweiten Schwingelement befestigt wird, also das Förderelement selbst, d.h. dessen anderes Teil einen Teil der Hilfs- bzw. Gegenmasse bildet.

Nach einem anderen Aspekt der Erfindung kann der Massenabgleich, d.h. die Kompensation der unterschiedlichen Masse verschiedener, mit dem Vibrationsförderer verwendeter Förderelemente auch dadurch erfolgen, daß zumindest ein Federelement der Nutzmasse oder eines die Nutzmasse einschließenden Schwingsystems derart veränderbar bzw. einstellbar ist, daß die Resonanz- oder Eigenfrequenz der Nutzmassse gleich oder in etwa gleich der Eigenfrequenz der Gegenmasse ist. Es erfolgt hier also eine Änderung der Federkonstanten wenigstens eines Federelementes der Nutzmasse und keine Änderung der Gegenmasse bzw. Hilfsmasse. Bevorzugt ist bei dieser Ausführung die Gegenmasse so gewählt, daß sie gleich der Nutzmasse dann ist, wenn von den für die Verwendung vorgesehenen unterschiedlichen Förderelementen dasjenige verwendet ist, welches die größte Masse aufweist. Dies bedeutet dann auch, daß bei Verwendung des Förderelementes mit der größten Masse die Federkonstanten der Federelemente der Nutz- und Gegenmasse gleich sind.

Bevorzugt wird der Vibrationsförderer so betrieben, daß die Resonanz- oder Eigenfrequenz des Schwingungssystems, die eine Funktion der Masse bzw. Gegenmasse und der von den Federelementen erzeugten Federkonstanten ist, möglichst gleich der Frequenz des Antriebs, beispielsweise einer mit Netzfrequenz betriebenen Magnetanordnung ist. Um in diesem Sinne eine optimale Arbeitsweise zu ermöglichen, ist bei einer bevorzugten Ausführungsform der Erfindung auch ein Abgleich bzw. eine Anpassung der Federkonstanten möglich, und zwar ohne daß eine völlige Demontage des Schwingsystems notwendig ist. Hierfür bilden die Federelemente feste, die Elemente des Schwingsystems aneinander haltende Federelemente, sowie zusätzlich entfernbare und/oder austauschbare Federelemente.

Bei dem erfindungsgemäßen Vibrationswendelförderers erfolgt die Kompensation unterschiedlicher Größen bzw. Massen der verwendeten Töpfe nicht durch einen Massenabgleich, sondern zumindest in einem vorgegebenen Bereich durch Änderung bzw. Einstellung der Federcharakteristik bzw. Federkonstanten der der Nutzmasse zugeordneten Federanordnungen derart, daß bei dem jeweils verwendeten Topf die Eigenfrequenz der Nutzmasse gleich der Eigenfrequenz der Gegenschwingmasse ist. Das dynamische Trägheitsmoment der Gegenschwingmasse ist jeweils so gewählt, daß bei Verwendung des größten vorgesehenen Topfes, d.h. desjenigen Topfes der das größte dynamische Trägheitsmoment für die Nutzmasse bringt, das dynamische Trägheitsmoment der Nutzmasse gleich oder größer ist als das dynamische Trägheitsmoment der Schwingmasse. Hierdurch ist es möglich, die Federanordnungen zumindest für die Nutzmasse so auszubilden, daß sie bei dem größten Topf jeweils von einem Blattfederpaket mit einer Vielzahl von Blattfedern gebildet sind, so daß bei Verwendung eines kleineren Topfes eine Anpassung durch Entfernen einer oder mehreren Blattfedern möglich ist.

Unabhängig davon, ob zur Kompensation der jeweiligen Größe des verwendeten Topfes ein Abgleich durch Änderung des Trägheitsmomentes und/oder durch Änderung der Federcharakteristik erfolgt, wird der Vibrationswendelförderer so betrieben, daß die Resonanz- bzw. Eigenfrequenz des Schwingsystems, die eine Funktion des dynamischen Trägheitsmomentes unter Federcharakteristik in der Federkonstanten ist, möglichst gleich der Frequenz des Antriebes, beispielsweise der Netzfrequenz einer mit dieser Frequenz betriebenen Magnetanordnung ist. Eine in diesem Sinne optimale Arbeitsweise läßt sich auf jeden Fall durch einen Abgleich bzw. eine Anpassung der Federkonstanten erreichen.

Bei einer bevorzugten Ausführungsform der Erfindung sind für eine Anpassung der Federcharakteristiken bzw. Federkonstanten feste Federelemente, die die Elemente des Schwingsystems aneinanderhalten, sowie zusätzlich entfernbare und/oder austauschbare Federelemente vorgesehen.

Weitere Ausführungen der Erfindung sind Gegenstand der Unteransprüche.

Die Erfindung wird im folgenden anhand der Figuren an Ausführungsbeispielen näher erläutert. Es zeigen:
- Fig. 1: eine Vorder- bzw. Stirnansicht eines Vibrations-Längs-Förderers gemäß der Erfindung, und zwar in einer in der Achse der Förderrichtung verlaufenden Blickrichtung;
- Fig. 2: einen Längsschnitt gemäß der Schnittlinie I-I der Fig. 1;
- Fig. 3: einen Schnitt entsprechend der Linie II-II der Fig. 2;
- Fig. 4: einen Schnitt entsprechend der Linie III-III der Fig. 1;
- Fig. 5: in Seitenansicht eine weitere Ausführungsform des erfindungsgemäßen Vibrationsförderers;
- Fig. 6: eine Stirnansicht des Vibrationsförderers der Fig. 5 in Blickrichtung des Pfeiles B der Fig. 5;
- Fig. 7: einen Schnitt entsprechend der Linie IV-IV der Fig. 5;
- Fig. 8: einen Schnitt entsprechend der Linie V-V der Fig. 5;
- Fig. 9: eine ähnliche Darstellung wie Fig. 8, jedoch bei einer weiteren Ausführungsform;
- Fig. 10: in Detaildarstellung die Befestigung der Blattfedern einer austauschbaren Blattfederanordnung;
- Fig. 11: in ähnlicher Darstellung wie Fig. 6 eine weitere Ausführungsform der Erfindung;
- Fig. 12: in vereinfachter Darstellung und im Schnitt eine Ausführungsform des erfindungsgemäßen Vibrationsförderers in Form eines Wendelförderers;
- Fig. 13: in vereinfachter Darstellung einen Schnitt entsprechend der Linie IV-IV der Fig. 12;
- Fig. 14: in vereinfachter Teildarstellung eine der Blattfederanordnungen;
- Fig. 15: in Einzeldarstellung eine der von mehreren Einzelmassen gebildeten anpaßbaren bzw. justierbaren Hilfsmassen des Vibrationsförderers nach Fig. 12;
- Fig. 16: in ähnlicher Darstellung wie Fig. 14 eine weitere Ausführungsform des erfindungsgemäßen Vibrationsförderers;
- Fig. 17: in vereinfachter schematischer Darstellung eine Draufsicht auf ein radial verstellbares Ringsegment eines die Hilfsmasse bildenden Ringes bei einer weiteren möglichen Ausführungsform.

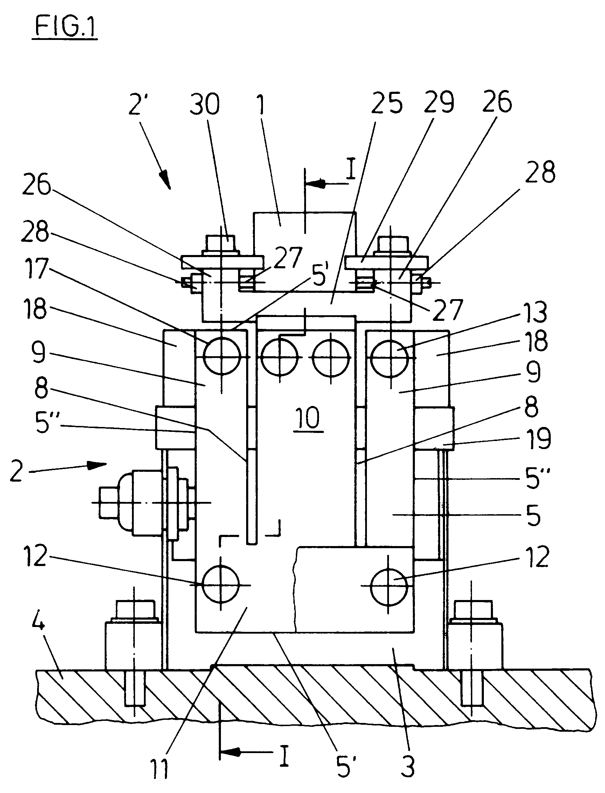

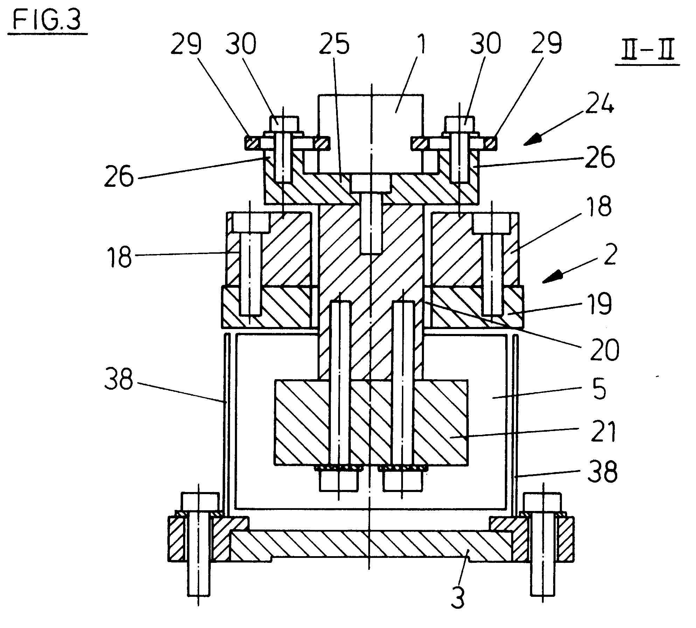

In den Figuren 1 bis 4 ist 1 eine Förderschiene oder Förderrinne, die eine geradlinige, im wesentlichen horizontale Förderstrecke des Vibrationslängsförderers für nicht näher dargestellte Klein-bzw. Kleinstbauteile bildet. Diese Förderrinne 1 ist an einem Vibrationsantrieb bzw. Schwingsystem 2 des Vibrationslängsförderers vorgesehen. Der Schwingsystem 2 ist seinerseits mittels einer Basisplatte 3 an einem Maschinengestell oder Maschinentisch 4 eines Fertigungsautomaten befestigt.

Durch das Schwingsystem 2 wird auf die Förderrinne 1 eine Vibrationsbewegung derart ausgeübt, daß sich die Bauteile in Richtung des Pfeiles A in Förderrinnenlängsrichtung bewegen.

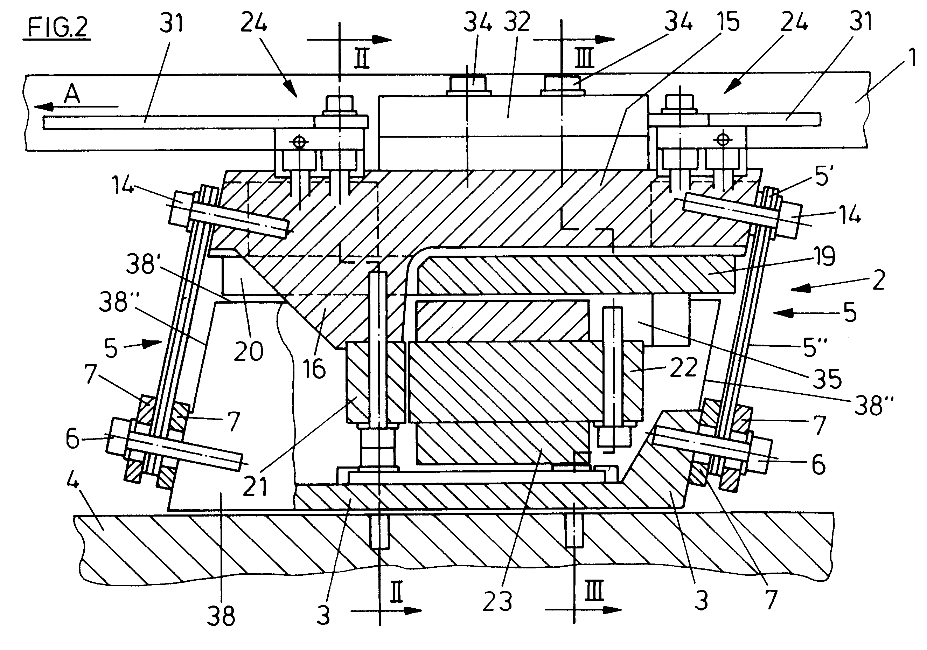

An den beiden in Förderrichtung aufeinander folgenden und gegenüber der Vertikalen schräg verlaufenden stirnseitigen Enden der Basisplatte 3, d. h. bei der für die Fig. 2 gewählten Darstellung an dem linken sowie rechten Ende der Basisplatte 3 ist als Federelement jeweils ein von drei lamellenartig übereinander angeordneten Blattfedern 5 gebildetes Blattfederpaket befestigt, und zwar unter Verwendung zweier Befestigungsschrauben 6 und zweier Klemm- bzw. Halteplatten 7, die bei festgezogenen, in Gewinde der Basisplatte 3 eingreifenden Befestigungsschrauben 6 die Blattfedern 5 jedes Blattfederpaketes zwischen sich einspannen.

Wie insbesondere die Fig. 1 zeigt, weisen die jeweils gleichartig geformten und aus einem geeigneten Federblatt hergestellten Blattfedern jeweils einen im wesentlichen rechteckförmigen Zuschnitt auf. Die kürzeren Seiten dieses Zuschnitts sind in der Fig. 1 mit 5' und die längeren Seiten mit 5'' bezeichnet. Jede Blattfeder 5 ist ausgehend von der in der Fig. 1 oberen, kürzeren und in horizontaler Richtung angeordneten Seite 5' mit zwei parallel zu den längeren Seiten 5'' verlaufenden Schlitzen 8 versehen, die jeweils in gleichem Abstand von der in der Fig. 1 unteren, kürzeren Seite 5' des Zuschnittes enden, und zwar in einem Abstand, der etwa der Breite der rechteckförmigen Klemmplatten 7 entspricht. Durch die beiden Schlitze 8 sind die Blattfedern 5 jeweils doppelt geschlitzt und bilden drei durch die Schlitze 8 voneinander getrennte Zungen 9 und 10, die am geschlossenen Ende der Schlitze 8 durch den nicht geschlitzten Bereich 11 der betreffenden Blattfeder 5 einstückig miteinander verbunden sind. Wie die Fig. 1 weiterhin auch zeigt, besitzt die mittlere Zunge 10 in Richtung senkrecht zu den Schlitzen 8, d. h. in einer Achsrichtung parallel zu den kürzeren Seiten 5' eine Breite, die doppelt so groß ist wie die entsprechende Breite eine äußeren Zunge 9, d. h. die Summe der Breiten der beiden äußeren Zungen 9 ist gleich der Breite der mittleren Zunge 10.

Im Abschnitt 11 sind auf einer Achse parallel zu der kürzeren Seite 5' Bohrungen 12 für die Befestigungsschrauben 6 vorgesehen. Die mittlere Zunge 10 besitzt an ihrem freien, d. h. dem Abschnitt 11 entfernt liegenden Ende zwei Bohrungen 13 und die beiden äußeren Zungen 9 jeweils eine Bohrung 13. Diese Bohrungen liegen wiederum auf einer gemeinsamen Linie parallel zu den kürzeren Seiten 5'.

Es versteht sich, daß die Blattfedern 5 jedes Blattfederpaketes in gleicher Orientierung und bezüglich der Schlitze 8 und Bohrungen 12 bzw. 13 deckungsgleich übereinander angeordnet sind.

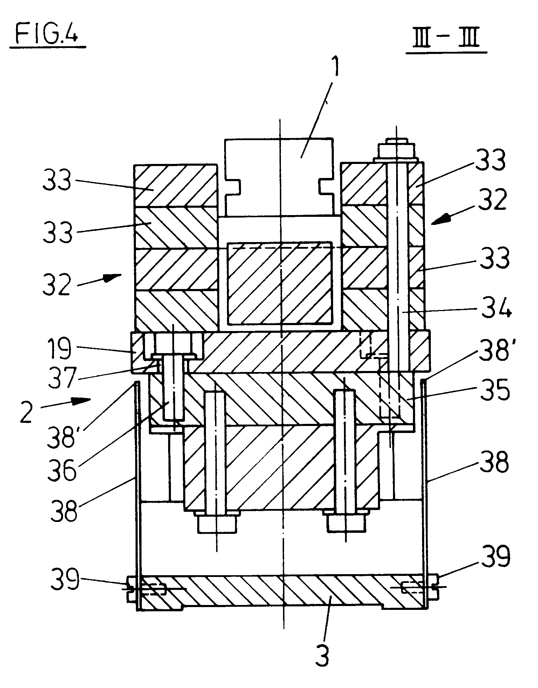

Die mittleren Zungen 10 der Blattfedern 5 der Blattfederpakete sind jeweils mit Hilfe von den Bohrungen 13 durchgreifenden Befestigungsschrauben 14 an den stirnseitigen, gegenüber der vertikalen abgeschrägten Enden eines aus Leichtmetall hergestellten Schwingelementes 15 befestigt. Dieses Schwingelement 15 ist im wesentlichen ein langgestreckter, mit seiner Achse in Förderrichtung A orientierter quaderförmiger Körper, der in einer Querschnittsebene senkrecht zur Förderrichtung A einen rechteckförmigen Querschnitt aufweist (Fig. 4) und im Bereich eines Endes mit einem über die untere Querschnittsseite vorstehenden Vorsprung 16 versehen ist.

Die freien Enden der Zungen 9 sind mit Hilfe von die dortigen Bohrungen 13 durchgreifenden Befestigungsschrauben 17 jeweils an einem Halteklotz 18, und zwar an einer gegenüber der vertikalen schräg verlaufenden Fläche dieses Halteklotzes 18 befestigt. Die Halteklötze 18, von denen insgesamt vier vorgesehen sind, sind ihrerseits an der Oberseite eines plattenförmigen, d. h. eines als rechteckförmige Platte ausgebildeten Schwingelementes 19 befestigt, und zwar derart, daß jeder Halteklotz 18 über die horizontale Oberseite dieses plattenförmigen Schwingelementes 19 vorsteht. Durch die Befestigung der von den Blattfedern 5 gebildeten Blattfederpaketen an gegenüber der Vertikalen geneigten Fläche sowohl an der Basisplatte 3 als auch an dem Schwingelement 15 und den Halteklötzen 18 weisen die Blattfedern 5 bzw. die von diesen gebildeten Blattfederpakete eine Neigung gegenüber der Vertikalen bzw. gegenüber einer senkrecht zur Förderrichtung verlaufenden vertikalen Ebene auf, d. h. ausgehend von der oberen Seite 5' schließen die Blattfedern 5 einen Winkel kleiner als 90° mit der Achse der Förderrichtung ein, der sich in Förderrichtung öffnet, wie dies für eine die Bauteile in Förderrichtung A bewegende Vibrationsbewegung notwendig ist.

Wie die Figuren zeigen, ist das plattenförmige Schwingelement 19 mit gewissem Abstand unterhalb des Schwingelementes 15 angeordnet und besitzt im Bereich der einen Stirnseite des Schwingsystems 2, d. h. bei der für die Fig. 2 gewählten Darstellung im Bereich des dortigen linken Endes eine zu diesem Ende hin offene Ausnehmung 20, durch die der Vorsprung 16 hindurchreicht, und zwar derart, daß dieser Vorsprung auch im Bereich der Ausnehmung 20 im Bereich aller seiner Flächen von dem Schwingelement 19 beabstandet ist und der Vorsprung 16 mit seinem freien Ende relativ weit über die Unterseite des im wesentlichen als rechteckförmige Platte ausgebildeten Schwingelementes 19 vorsteht. An diesem unteren Ende ist am Vorsprung 16 ein als Magnetanker dienender Klotz 21 aus ferromagnetischem Material, d. h. aus Stahl befestigt.

Die Figuren zeigen weiterhin, daß das Schwingelement 19 senkrecht bzw. quer zur Förderrichtung A beidseitig über das Schwingelement 15 wegsteht und an diesen überstehenden Bereichen auch jeweils die Halteklötze 18 befestigt sind, und zwar derart, daß sich diese beidseitig von dem Schwingelement 15 befinden, jedoch jeweils in einem vorgegebenen Abstand von dem Schwingelement 15. Das Schwingelement 19 liegt mit seinen längeren Seiten parallel zur Förderrichtung A und mit seinen kürzeren Seiten senkrecht zu dieser Förderrichtung.

An der Unterseite des Schwingelementes 19 sind ein aus einem ferromagnetischen Material, z. B. aus Stahl hergestellter Magnetkern 22 sowie eine diesen Kern umschließende Magnetspule 23 vorgesehen. Eine plane Stirnseite des Magnetkernes 22, der mit seiner von den Windungen der Magnetspule 23 im wesentlichen konzentrisch umschlossenen Längsachse parallel zur Förderrichtung A liegt, ist in einem vorgegebenen Abstand einer ebenen Fläche des Magnetankers 21 gegenüberliegend angeordnet. Dieser Abstand entspricht einem Magnet- oder Luftspalt.

Im Bereich der beiden, in Förderrichtung A aufeinander folgenden Enden, d. h. im Bereich des in der Fig. 2 linken und in dieser Figur rechten Endes des Schwingelementes 15 ist an diesem Schwingelement jeweils ein U-förmiger Haltebock 24 befestigt, der einen sich quer zur Förderrichtung A erstreckenden Abschnitt 25 aufweist, mit dessen Unterseite der jeweilige Haltebock 24 an der Oberseite des Schwingelementes 15 befestigt ist. An den beiden Enden ist der quaderförmige Abschnitt 25 einstückig mit jeweils einem Vorsprung 26 versehen. Die beiden Vorsprünge 26 und der Abschnitt 25 bilden die nach oben hin offene U-Form des jeweiligen Bockes 24. Zwischen den beiden Vorsprüngen 26 jedes Haltebockes 24, die an ihren einander zugewandten Seiten einen Abstand aufweisen, der größer ist als die äußere Breite der Förderrinne 1, ist diese Förderrinne gehalten und mit dem Schwingelement 15 verbunden. Hierfür ist in einem Gewinde jedes Vorsprunges 26 eine Maden- bzw. Einstellschraube 27 mit Kontermutter 28 derart vorgesehen, daß diese Einstellschraube 27 mit ihrer Achse parallel zur Längserstreckung des Abschnittes 25, d. h. in horizontaler Richtung und senkrecht zur Förderrichtung A liegt. Die Kontermutter 28 befindet sich jeweils an der der Führungsrinne 1 abgewandten Außenseite des betreffenden Vorsprunges 26. Mit einem über die der Förderrinne 1 zugewandte Innenseite des jeweiligen Vorsprungs 26 vorstehenden Ende bildet jede Einstellschraube 27 einen gegen eine Längsseite der Förderrinne 1 anliegenden einstellbaren Anschlag.

Durch Verdrehen der Einstellschraube 27, von denen insgesamt vier vorgesehen sind, kann die Lage bzw. Orientierung der Förderrinne 1 in bezug auf das Schwingelement 15 und damit in bezug auf den Schwingsystem 2 insgesamt eingestellt werden. Die einmal getroffene Einstellung wird durch Anziehen der Kontermuttern 28 festgelegt, so daß auch nach einem eventuellen Abnehmen der Förderrinne 1, z. B. für Reparaturzwecke oder für eine Nachbearbeitung, die Förderrinne 1 ohne die Notwendigkeit einer erneuten Einstellung durch Einsetzen in die Halteböcke 24 am Schwingsystem 2 in der richtigen Orientierung wieder befestigt werden kann. Zur endgültigen Verriegelung dienen mit Langlöchern versehene Verriegelungsplatten 29, von denen jeweils eine an der Oberseite dieses Vorsprunges 26 vorgesehen, d. h. mittels einer Befestigungsschraube 30 gehalten ist. Bei am Schwingsystem 2 bzw. am Schwingelement 15 befestigter Führungsrinne greift die Verriegelungsplatten 29 jeweils bei festgezogenen Befestigungsschrauben 30 seitlich in Nuten 31 der Förderrinne 1 ein.

Das Schwingelement 15 und die Förderrinne 1 sowie alle mit dem Schwingelement 15 und/oder der Förderrinne 1 verbundenen Teile bilden die Nutzmasse des Schwingsystemes 2 und das Schwingelement 19 mit allen an diesen Elementen vorgesehenen Teilen, insbesondere mit dem Magnetkern 22 und der relativ schweren Magnetspule 23, aber auch mit den Halteklötzen 18 die Gegenmasse des Schwingsystems. Die Nutzmasse und die Gegenmasse sind dabei mit ihren Massenschwerpunkten auf einer Linie angeordnet sind, die im wesentlichen in einer sich in Förderrichtung A erstreckenden vertikalen Ebene liegt. Die beiden Massen sind weiterhin so aufeinander abgestimmt, daß bei eingeschalteter Magnetspule 23, d. h. mit einem Wechselstrom beaufschlagter Magnetspule 23 beide Massen relativ und gegenläufig zueinander unter elastischer Verformung der Blattfedern 5 bzw. deren Zunge 9 und 10 schwingen, ohne daß Vibrationsbewegungen auf die Basisplatte 3 und damit auf den Maschinentisch 4 übertragen werden. Dieser Idealzustand ist bei der dargestellten Ausführungsform, bei der die von der Zunge 10 und zwei Zungen 9 gebildete Federkonstante jeweils gleich groß ist, dann erreicht, wenn die Gegenmasse und die Nutzmasse gleich groß sind. Um dies insbesondere auch bei Förderrinnen 1 unterschiedlicher Masse zu erreichen, ist an der Oberseite des plattenförmigen Schwingelementes 19, und zwar im Bereich der beiden Längsseiten dieses Schwingelementes zwischen jeweils zwei Halteklötzen 18 eine in ihrer Größe veränderbare Hilfsmasse 32 vorgesehen.

Jede der beiden Hilfsmassen 32 besteht jeweils aus einer oder mehreren plattenartigen Einzelmassen 33 aus Metall bzw. Stahl, die mit Hilfe von Schrauben 34 zu der Hilfsmasse miteinander verbunden und an dem Schwingelement 19 der Gegenmasse gehalten sind. Da dieses Schwingelement außen liegt, d. h. zugänglich ist, können die beiden Hilfsmassen 32 durch Entfernen einer oder mehrerer Hilfsmassen 33 bzw. umgekehrt durch Hinzufügen einer oder mehrerer Hilfsmassen 33 so eingestellt werden, daß eine optimale Anpassung der Nutzmasse und der Gegenmasse erreicht ist. Um eine wirksame Einstellung der Gegenmasse durch Änderung der Hilfsmasse zu erreichen, ist es bei der dargestellten Ausführung auch wesentlich, daß die Nutzmasse möglichst klein gehalten ist, d. h. insbesondere auch der in die Nutzmasse mit eingehende Teil des Schwingsystems 2 keine unnötigen Massenelemente aufweist und auch das Schwingelement 15 aus einem Material mit geringem spezifischem Gewicht bzw. spezifischer Masse hergestellt ist, daß entsprechend die Gegenmasse klein gehalten werden kann. Insbesondere ist hier auch wesentlich, daß Elemente mit hoher Masse, insbesondere der Magnetkern 22 und die Magnetspule 23 an dem die Gegenmasse bildenden Schwingelement 19 befestigt sind.

Die Einzelmassen 33 sind bei der dargestellten Ausführungsform jeweils gleichartig ausgebildet. Grundsätzlich ist es selbstverständlich auch möglich, schwerere und leichtere Einzelmassen 33 vorzusehen, um so eine sehr exakte Anpassung der Gegenmasse an die hauptsächlich auch von der Förderrinne 1 und von dort vorgesehenen Funktionselementen bestimmten Nutzmasse in kleinen Schritten zu ermöglichen. Da bei dem erfindungsgemäßen Vibrationslängsförderer das der Nutzmasse zugeordnete Schwingelement 15 innen liegend und das der Gegenmasse zugeordnete Schwingelement 19 außen liegend vorgesehen sind, d. h. das der Gegenmasse zugeordnete Schwingelement 19 quer zur Förderrichtung A beidseitig über das Schwingelement 15 vorsteht und dort die Hilfsmassen 32 vorgesehen sind, ist die vorbeschriebene Massenanpassung unter Verwendung der Einzelmassen 33 insbesondere auch bei am Maschinentisch 4 montiertem Vibrationslängsförderer möglich, d. h. der Vibrationslängsförderer muß zur Massenanpassung nicht vom Maschinentisch 4 demontiert werden.

Da das der Gegenmasse zugeordnete Schwingelement 19 in der vorbeschriebenen Weise außen liegend vorgesehen ist, ist es auch möglich, einen Halteklotz 35, der an der Unterseite des Schwingelementes 19 vorgesehen ist und den Magnetkern 22 mit der Magnetspule 23 trägt, mit Befestigungsschrauben 36 an dem Schwingelement 19 zu befestigen, die jeweils an den seitlich über das Schwingelement 15 wegstehenden Bereichen des Schwingelementes 19, d. h. im Bereich der Längsseiten dieses Schwingelementes vorgesehen und somit (nach dem Abnehmen der Hilfsmassen 32) von oben her frei zugänglich sind. Bei der dargestellten Ausführungsform sind insgesamt zwei Befestigungsschrauben 36 vorgesehen, und zwar jeweils eine Befestigungsschraube im Bereich jeder Längsseite des Schwingelementes 19. Die Befestigungsschrauben 36 greifen durch Bohrungen 37 des Schwingelementes 19 hindurch in Gewindebohrungen des Halteklotzes 35. Die Bohrungen 37 besitzen insbesondere in Förderrichtung A einen Querschnitt, der größer ist als der Außendurchmesser der Befestigungsschrauben 36, so daß eine Einstellung des Halteklotzes 35 mit dem Magnetkern 22 und der Magnetspule 23 nicht nur relativ zum Schwingelement 19, sondern auch relativ zum Schwingelement 15 bzw. zu dem dort vorgesehenen Magnetanker 21 und damit eine Einstellung des Magnet- bzw. Luftspaltes zwischen dem Magnetanker 21 und dem Magnetkern 22 von außen her frei möglich ist, und zwar ebenfalls wiederum ohne die Notwendigkeit einer Demontage des Vibrationslängsförderers vom Maschinentisch 4.

Eine optimale Einstellung des Magnet- bzw. Luftspaltes zwischen dem Magnetanker 1 und dem Magnetkern 22 ist unerläßlich, um einerseits eine Relativbewegung zwischen dem Magnetanker 21 und dem Magnetkern 22 bzw. die gegenläufige Schwingbewegung zwischen der Nutzmasse und Gegenmasse ohne ein Einschlagen zwischen Magnetanker 21 und Magnetkern 22 zu ermöglichen, und um andererseits den Magnet- bzw. Luftspalt so klein wie nur irgend möglich zu halten. Ein zu großer Luft- bzw. Magnetspalt würde einen zu geringen Magnetfluß bzw. eine zu geringe elektrische Induktivität für die Magnetspule 23 und damit einen zu hohen, die Magnetspule möglicherweise zerstörenden Strom bedeuten.

Wie insbesondere aus den Figuren 1, 3 und 4 ersichtlich ist, sind an den beiden parallel zur Förderrichtung A verlaufenden Längsseiten der langgestreckten Basisplatte 3 noch zwei Blenden oder Wandelemente 38 mit Hilfe von Befestigungsschrauben 39 abnehmbar befestigt. Jedes Wandelement 38 reicht mit seiner oberen, im wesentlichen parallel zur Förderrichtung A verlaufenden horizontalen Seite 38' bis in die Nähe der Unterseite des plattenförmigen Schwingelementes 19, wobei selbstverständlich ein die Schwingbewegung ermöglichender Spalt zwischen dieser Seite 38' und der Unterseite des Schwingelementes 19 verbleibt. Wie aus den Figuren auch ersichtlich ist, steht das Schwingelement 19 mit seinen beiden Längsseiten geringfügig über die Außenfläche des jeweiligen Wandelementes 38 vor. Die beiden Wandelemente 38 erstrecken sich weiterhin bis an die beiden, die Blattfedern 5 tragenden Stirnseiten der Basisplatte 3. Die dortigen kürzeren Seiten 38'', die im Abstand von dem jeweiligen Blattfederpaket vorgesehen sind, verlaufen schräg zur Vertikalen, d. h. parallel zu den Blattfedern des jeweils benachbarten Blattfederpaketes.

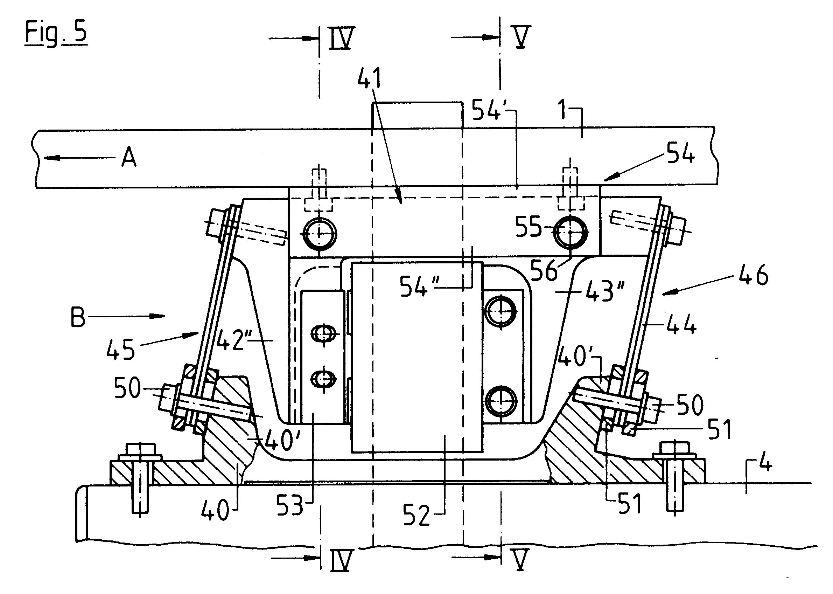

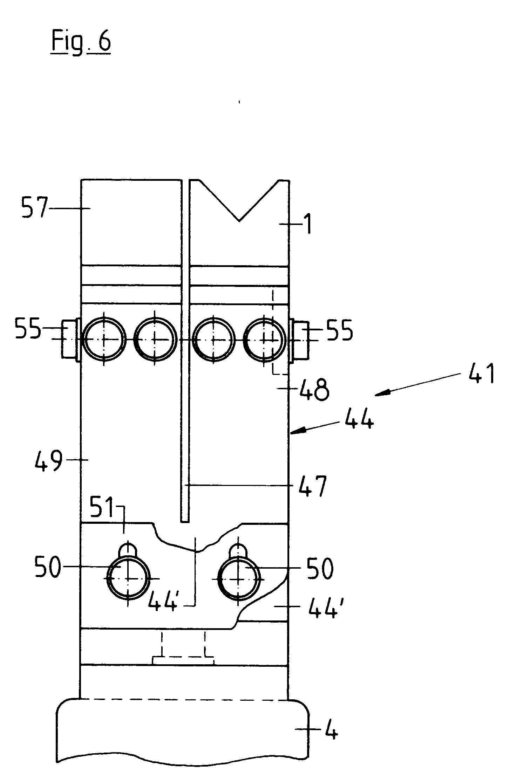

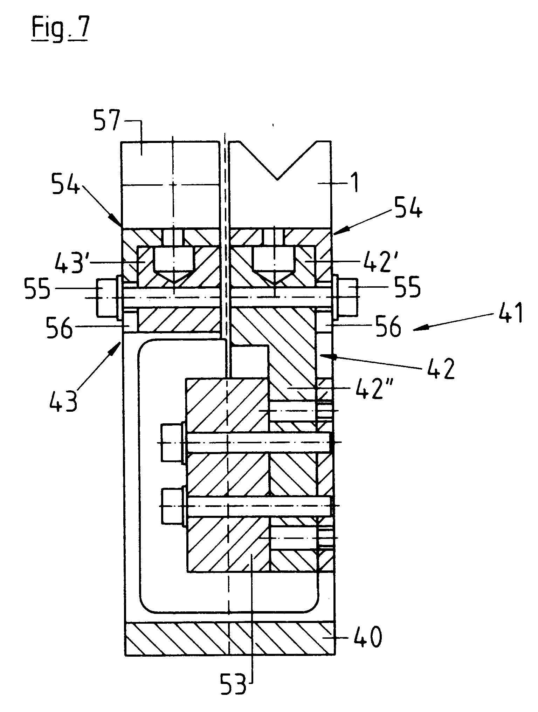

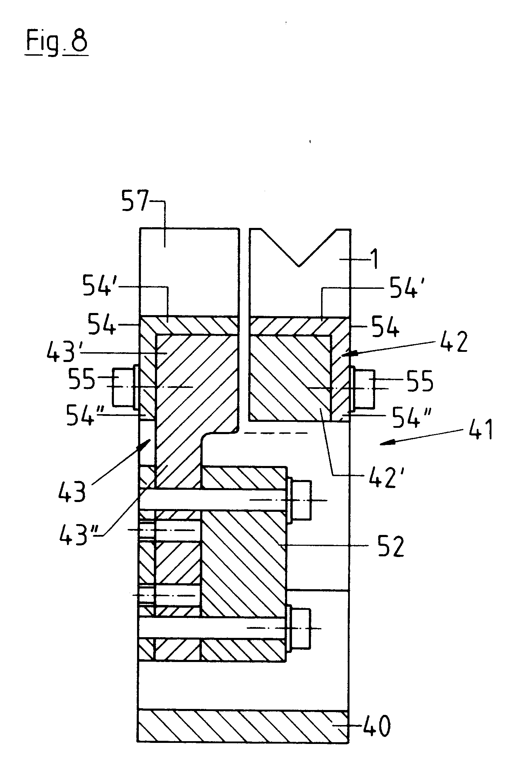

In den Fig. 5 bis 8 ist eine weitere Ausführung eines Vibrationsförderers gemäß der Erfindung dargestellt. Dieser Vibrationsförderer besteht aus einem am Maschinentisch 4 oder an einem anderen Tragelement oder Konsole befestigten Basisplatte 40, welche Teil eines Schwingsystems 41 ist. Dieses Schwingsystem besitzt neben der Basisplatte 40 zwei Schwingelemente 41 und 42, die aus einem geeigneten Metall mit möglichst geringem spezifischen Gewicht, beispielsweise aus einer Aluminiumlegierung hergestellt sind und hinsichtlich ihrer Formgebung jeweils im wesentlichen einen sich in der Achse der Förderrichtung A erstreckenden Jochabschnit 42' bzw. 43', der sich jeweils mit Abstand oberhalb der Basisplatte 40 befindet, sowie einen sich von diesem Jochabschnitt in vertikaler Richtung nach unten erstreckenden Schenkel 42'' bzw. 43'' aufweisen.

Wie die Fig. zeigen, sind die beiden Schwenkelelemente 42 und 43 quer zur Förderrichtung A nebeneinander und voneinander beabstandet vorgesehen, und zwar beidseitig von einer vertikalen, die Förderrichtung A einschließenden Mittelebene. Über zwei jeweils mehrere Blattfedern 44 aufweisende Blattfederpakete 45 und 46 sind die beiden Schwingelemente 42 und 43 mit der Basisplatte 40 verbunden. Die horizontale Breite der Basisplatte 40 senkrecht zur Förderrichtung A ist in etwa gleich der entsprechenden Breite der von den beiden Schwingelementen 42 und 43 gebildeten Anordnung. Die Blattfedern 44 sind jeweils so ausgebildet, daß jede Blattfeder 44 durch eine mittlere Schlitzung 47 zwei hinsichtlich ihrer Formgebung gleiche Zungen 48 und 49 bildet, die im unteren Bereich der jeweiligen Blattfeder 44 durch einen durchgehenden Abschnitt 44' miteinander verbunden sind. Die Zunge 48 jeder Blattfeder 44 ist mittels zweier Befestigungsschreiben 50 an dem in der Fig. 5 linken bzw. rechten Ende des Jochabschnittes 42' und die Zunge 49 jeder Blattfeder 44 mittels zweier Schrauben 50 an dem in der Fig. 5 linken bzw. rechten Ende des Jochabschnittes 43' befestigt. Im Bereich des durchgehenden Abschnittes 44' sind die Blattfedern 44 unter Verwendung von Schrauben 50 und Unterlegblechen 51 an der Basisplatte 40 bzw. an dort über die Oberseite wegstehenden Nasen 40' befestigt. Wie die Figuren zeigen, sind die bei der dargestellten Ausführungsform jeweils zwei Blattfedern 44 aufweisenden Blattfederanordnungen bzw. Pakete 45 und 46 gegenüber der Vertikalen wieder geneigt.

Wie die Figuren weiterhin zeigen, ist der Schenkel 42'' in Förderrichtung A gegenüber dem Schenkel 43'' versetzt, d.h. der Schenkel 42'' befindet sich an dem in der Fig. 5 linken, bezogen auf die Förderrichtung A vorderen Ende und der Schenkel 43'' an dem in der Fig. 5 rechten, bezogen auf die Förderrichtung A hinteren Ende des Schwingsystems 41. Am Schenkel 43'' ist die Magnetspule 52 befestigt, und zwar derart, daß diese Magnetspule innerhalb des zwischen den beiden Schenkeln 42'' und 43'' gebildeten Raumes unterhalb der Jochabschnitte 42' und 43' angeordnet ist. Am Schenkel 42'' ist ein mit der Magnetspule 52 zusammenwirkender Magnetanker 53 befestigt. Zwischen dem Eisenkern der Magnetspule 52 und dem Magnetanker 53 ist wiederum der Magnetspalt mit vorgegebener Breite gebildet, und zwar in einer senkrecht zur Förderrichtung A verlaufenden vertikalen Ebene.

Bei der dargestellten Ausführungsform bildet das Schwingelement 42 Teil der Nutzmasse, d.h. auf diesem Schwingelement ist die Förderschiene bzw. Förderrinne 1 befestigt, und zwar mit Hilfe eines Befestigungswinkels 54, der mit seinem einen horizontalen Schenkel 54' an die Unterseite der Förderrinne 1 angeschraubt ist und mit seinem vertikalen anderen Schenkel 54'' in eine seitliche Ausnehmung des Jochabschnittes 42' eingreift und dort mittels Schrauben 55 festgelegt ist. Für die Schrauben 55 besitzt der Befestigungswinkel 54 bzw. dessen Schenkel 54'' Schlitze 56, die zu der dem Schenkel 54' entfernt liegenden Kante des Schenkels 54'' hin offen sind. Hierdurch ist es möglich, die Förderrinne 1 nach dem Lösen der Schrauben 55 vom Schwingelement 42 nach oben abzuheben und wieder auf das Schwingelement 42 aufzusetzen, wobei sämtliche Einstellungen insbesondere am Vibrationsförderer sowie bezüglich der Zuordnung dieses Vibrationsförderers und der Förderrinne 1 zu anderen Elementen eines Gesamt-Systems erhalten bleiben.

Das Schwingelement 43 bildet bei der dargestellten Ausführungsform Teil der Gegenmasse, d.h. an dem Schwingelemnt 43 bzw. auf der Oberseite des Jochabschnittes 43' ist seitlich von der Förderrille 1 mit Hilfe eines Befestigungswinkels 54 die wiederum aus mehreren Einzelmassen bestehende Hilfsmasse 57 vorgesehen.

Die Besonderheit der in den Fig. 5 bis 8 dargestellten Ausführung bzw. des dortigen Schwingsystems 41 besteht darin, daß das Schwingelement 42 mit der Förderrinne 1 und das Schwingelement 43 mit der Hilfsmasse 57 beidseitig von einer vertikalen, die Förderrichtung A einschließenden Mittelebene vorgesehen sind. Hierdurch ergibt sich insbesondere eine sehr einfache Formgebung für die Schwingelemente 42 und 43, und zwar trotz der Möglichkeit eines einfachen Massenabgleichs durch entsprechende Wahl der Hilfsmasse 57 bzw. der Einzelmassen (Trimmgewichte).

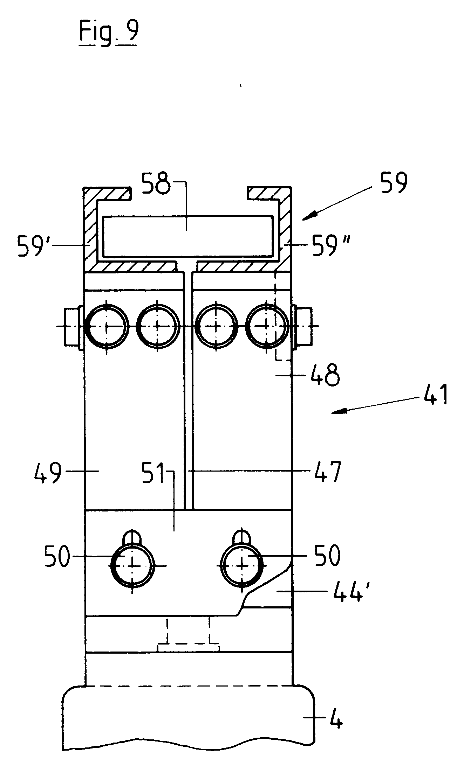

Wie die Fig. 9 zeigt, besteht grundsätzlich die Möglichkeit, bei Förderung bestimmter, z. B. besonders breiter Bauelemente 58 beide Schwingelemente 42 und 43 für die Bewegung dieser Bauelemente 58 zu nutzen. In diesem Fall wird dann anstelle der Förderrinne 1 eine geteilte Förderrinne 59 verwendet, die bei der dargestellten Ausführungsform einen im wesentlichen C-förmigen und an der Oberseite offenen Querschnitt besitzt und aus den beiden Elementen 59' und 59'' besteht. Jedes dieser Elemente ist in geeigneter Weise an der Oberseite eines Schwingelementes 42 bzw. 43 befestigt. Bei eingeschalteter, mit Wechselstrom betriebener Magnetspule 52 bewegen sich dann entsprechend den Schwingelementen 42 und 43 auch die beiden Elemente 59' und 59'' der Förderrinne oder -schiene 59 gegenläufig, so daß insgesamt auf die Bauelemente 58 eine Förderwirkung in Richtung des Pfeiles A der Fig. 5 ausgeübt wird, d.h. sich diese Bauelemente 58 in Förderrichtung bewegen. Durch entsprechende Wahl der Masse der Elemente 59' und 59'' und/oder durch einen zusätzlichen Massenabgleich wird wiederum dafür gesorgt, daß die Nutzmasse und der Gegenmasse gleich bzw. in etwa gleich sind, und zwar bei gleicher Federkonstanten der Zungen 48 und 49.

Um bei möglichst geringer Stromaufnahme der Magnetspule 52 eine optimale Förderwirkung zu erreichen, ist es sinnvoll, das jeweilige Schwingsystem 41 in der Nähe seiner mechanischen, d.h. durch die Massen und die Federkonstanten der Blattfedern 44 bzw. der Blattfederpakete 45 und 46 bestimmten Resonanz zu betreiben. Insbesondere dann, wenn Förderschienen oder -rinnen 1 bzw. 59 mit sehr unterschiedlicher Masse zusammen mit ein und demselben Schwingsystem 41 verwendet werden sollen und aus diesem Grunde ein Massenabgleich in einem relativ großen Bereich erforderlich ist, kann es notwendig, zumindest jedoch zweckmäßig sein, durch Austausch der Blattfedern 44 und/oder durch Änderung der Anzahl dieser Blattfedern die Federkonstante an die geänderte Masse anzupassen.

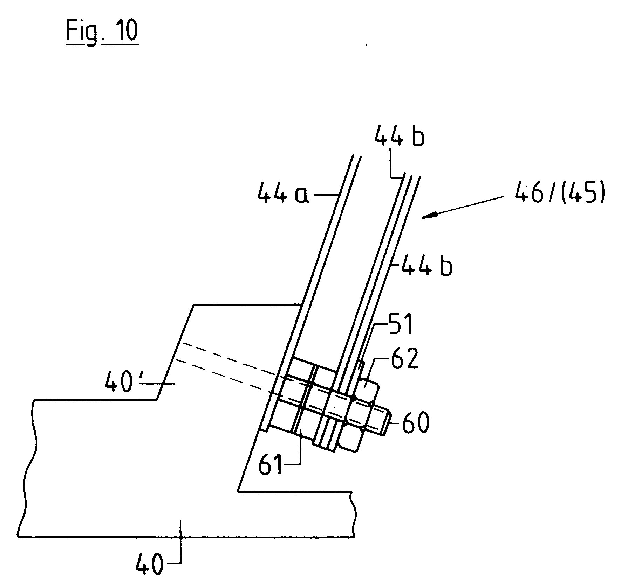

Um bei einem solchen Austausch der Blattfedern und/oder bei einer Änderung der Anzahl der Blattfedern nicht das gesamte Schwingsystem demontieren zu müssen bzw. dafür zu sorgen, daß die Befestigung der Schwingelemente 42 und 43 an der Basisplatte 40 erhalten bleibt, kann entsprechend der Fig. 10 bei jeder Blattfederanordnung 45 und 46 eine Blattfeder 44a vorgesehen sein, die auf jeden Fall fest mit der Basisplatte 40 und den Schwingelementen 42 bzw. 43 verbunden ist. Zusätzlich zu dieser Blattfeder 44a sind dann weitere, abnebmbare bzw. austauschbare Blattfedern 44b vorgesehen. Anstelle der Schrauben 50 sind Gewindebolzn 60 verwendet, an denen die festen, d.h. nicht austauschbaren Blattfedern 44a mit Hilfe von Konter-Muttern 61 festgelegt sind. Zum Festlegen der austauschbaren Blattfedern 44b dienen die Muttern 62.

Selbstverständlich kann eine ähnliche Ausbildung auch bei den Blattfedern 5 des Schwingsystems 2 verwendet sein.

Bei der vorstehenden Beschreibung wurde davon ausgegangen, daß jeweils ein Massenabgleich erfolgt, und zwar derart, daß Nutzmasse und Gegenmasse gleich oder in etwa gleich sind, wobei durch Austausch der Blattfedern zusätzlich auch die Federkonstanten für die Nutzmasse und Gegenmasse derart eingestellt werden, daß sich für die beiden Schwingelemente eine Eigenfrequenz ergibt, die möglichst gleich der Frequenz des Antriebs ist.

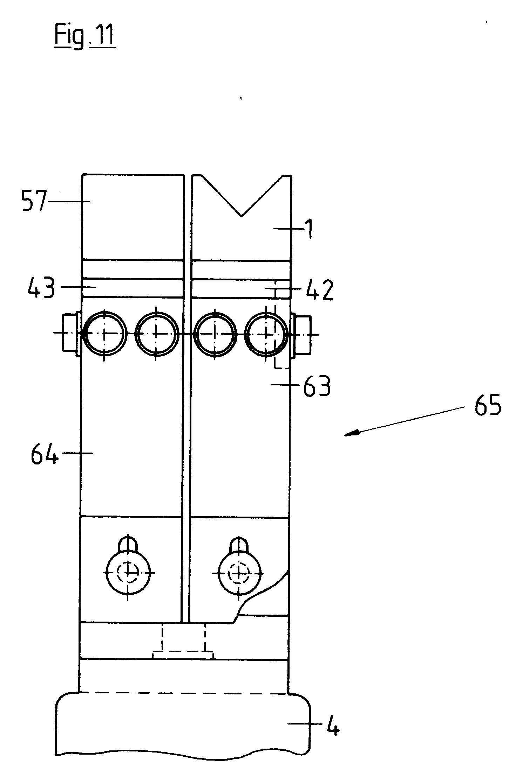

In der Fig. 11 ist ein Vibrationsförderer dargestellt, bei dem eine Kompensation des Schwingsystems bei Förderrinnen 1 mit unterschiedlicher Masse nicht durch entsprechende Änderung der Hilfsmasse 57 vorgenommen wird, sondern durch Änderung der Federkonstanten der dem Schwingelement 42 zugeordneten Blattfedern, und zwar in der Form, daß die Eigenfrequenz der das Schwingelement 42, die Förderrinne 1 usw. einschließenden Nutzmasse gleich der Eigenfrequenz der das Schwingelement 43, die Hilfsmasse 57 usw. einschließenden Gegenmasse ist. Um dies zu ermöglichen, sind anstelle der die Zungen 48 und 49 bildenden Blattfedern 44 bzw. 44a und 44b getrennte Blattfedern für die Schwingelemente 42 und 43 vorgesehen, d.h. die Blattfedern 63 für das Schwingelement 42 und die Blattfedern 64 für das Schwingelement 43.

Das in der Fig. 11 dargestellte Schwingsystem 65, bei dem die Blattfedern 63 und 64 wiederum mehrere Blattfederpakete bilden, ist insbesondere hinsichtlich der Anzahl der je Federpaket verwendeten Blattfedern 63 und 64, der Hilfsmasse 57 auch unter Berücksichtigung der Massen der Schwingelemente 42 und 43 sowie der Massen der an diesen Schwingelementen befestigten Teile des Antriebs (Magnetspule mit Eisenkern und Magnetanker) auf diejenige Förderrinne 1 auch in bezug auf die Frequenz des Antriebes optimal abgestimmt, die (Förderrinne) im Rahmen einer vorgegebenen Auswahl von verwendeten Förderrinnen 1 mit unterschiedlichen Massen die größte Masse aufweist.

Wird anstelle der Förderrinne 1 mit dieser größten Masse eine Förderrinne 1 mit kleinerer Masse verwendet, so erfolgt bei dem Schwingsystem 65 keine Änderung der Hilfsmasse 57, sondern eine Änderung der Federkonstanten der von den Blattfedern 63 gebildeten Blattfederpakete, d.h. es erfolgt eine Reduzierung der Anzahl der je Federpaket verwendeten Blattfedern 63 und/oder ein Austausch dieser Blattfedern 63 derart, daß die die Förderrinne 1 und das Schwingelement 42 aufweisende Nutzmasse wiederum die gleiche Eigenfrequenz aufweist wie die das Schwingelement 43 und die Hilfsmasse 57 aufweisende Gegenmasse.

Speziell für diesen Abgleich der Federkonstanten für die Nutzmasse ist es zweckmäßig, für die von den Blattfedern 63 gebildeten Blattfederanordnungen eine Ausführung ähnlich der Fig. 10 vorzusehen.

Insbesondere bei den in den Figuren 5 bis 8 und 11 dargestellten Ausführungsformen ist es bei Verwendung der Förderrinne 1 oder eines ähnlichen, nur an einem der Schwingelemente 42, 43 befestigten Förderelementes auch möglich, dieses Förderelement nicht an dem Schwingelement 42, sondern an dem Schwingelement 43 und dementsprechend die evtl. vorhandene Hilfsmasse nicht an dem Schwingelement 43, sondern an dem Schwingelement 42 vorzusehen, d.h. die Schwingelemente in ihrer Funktion zu vertauschen, falls dies zweckmäßig erscheint. Grundsätzlich ist es auch denkbar, an beiden Schwingelementen 42 und 43 jeweils eine gesondere Förderrinne 1 oder ein ähnliches Förderelement zu verwenden.

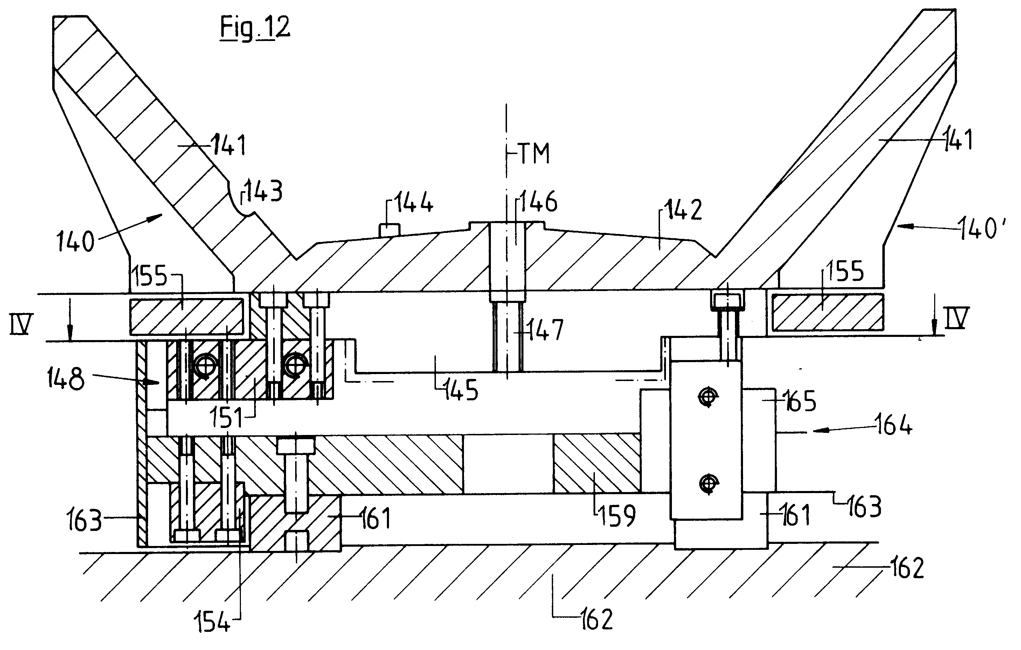

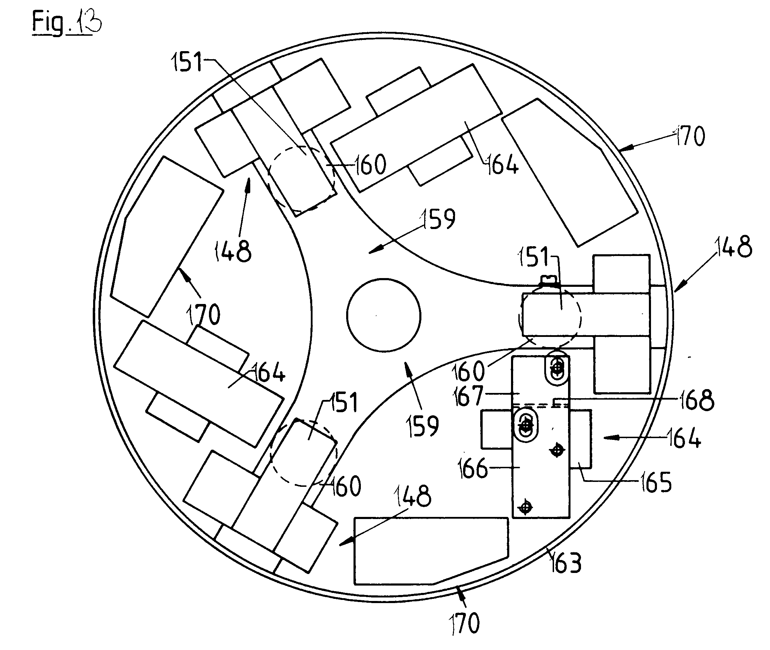

In den Figuren 12 - 17 ist 140 der in bezug auf eine vertikale Mittelachse TM rotationssymmetrisch ausgebildete Behälter oder Topf eines als Wendelförderer ausgebildeten Vibrationsförderers. Der an seiner Oberseite offene und sich nach oben hin kegel- bzw. trichterartig erweiternde und beispielsweise aus einem geeigneten Kunststoff gefertigte Topf 140 besteht im wesentlichen aus einer Umfangswand 141 und aus einem einstückig mit dieser Umfangswand hergestellten Boden 142. An der Innenfläche der Umfangswand 141 ist eine Förderstrecke 143 ausgebildet, die sich um die vertikale Topf-Mittelachse TM wendelartig von der Innenfläche des Bodens 142 bis an den oberen, offenen Rand des Topfes 140 bzw. der Umfangswand 141 erstreckt und auf der die im Inneren des Topfes 140 als ungeordnete Menge aufgenommenen Bauelemente 144 bewegt werden.

Mit der planen Unterseite des Bodens 142 ist der Topf 140 an der Oberseite einer Halteplatte 145 befestigt, und zwar bei der dargestellten Ausführungsform auswechselbar unter Verwendung eines nicht dargestellten, schraubbolzenartigen Verbindungs- bzw. Befestigungselementes, welches durch eine Bohrung 146 im Boden 142 in eine Gewindebohrung 147 der Halteplatte 145 einschraubbar ist. Die Bohrungen 146 und 147 sind dabei achsgleich mit der Achse TM vorgesehen.

An drei gleichmäßig um die Achse TM verteilten Bereichen ist jeweils eine Blattfederanordnung 148 vorgesehen, von denen bei der dargestellten Ausführungsform jede von zwei Blattfederpaketen, nämlich von dem Blattfederpaket 149 und dem Blattfederpaket 150 gebildet ist. Jedes Blattfederpaket besteht aus wenigstens zwei übereinander angeordneten Blattfedern. Mittels eines an der kreisscheibenförmigen Halteplatte 145 befestigten und in bezug auf die Achse TM radial über die Umfangsfläche dieser Platte wegstehenden Befestigungsklotzes 151 sind die oberen Enden der das Blattfederpaket 149 bildenden Blattfedern mit der Halteplatte 145 verbunden, und zwar unter Verwendung einer Befestigungsschraube 152. Die unteren Ende der das Blattfederpaket 149 bildenden Blattfedern sind mittels einer Befestigungsschraube 153 mit einem Halteklotz 154 verbunden.

Die Halteplatte 145 wird an ihrem Umfang von einem Ring 155 konzentrisch und mit Abstand umschlossen, dessen Achse achsgleich mit der Achse TM liegt. Im Bereich jeder Blattfederanordnung 148 ist am Ring 155 ein über die Unterseite dieses Ringes wegstehender Befestigungsklotz 156 befestigt, an welchem mittels Befestigungsschrauben 157 die oberen Enden der das Blattfederpaket 150 bildenden Blattfedern gehalten sind.

Die unteren Enden der das Blattfederpaket 150 bildenden Blattfedern sind mittels einer Befestigungsschraube 158 am Halteklotz 154 befestigt.

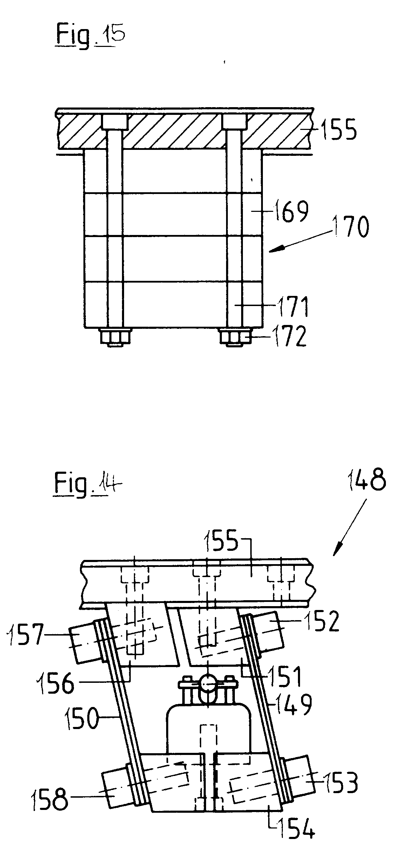

Durch die Verwendung der radial über die Umfangsfläche der Halteplatte 145 wegstehenden Befestigungsklötze 151 befinden sich nicht nur die Blattfederpakete 150, sondern auch die Blattfederpakete 149 unterhalb des Ringes 155. Wie insbesondere die Fig. 14 zeigt, sind bei jeder Blattfederanordnung 148 die Blattfedern weiterhin so angeordnet, daß die Blattfederpakete 149 und 150 in Umfangsrichtung des Ringes 155 gegeneinander versetzt sind. Weiterhin sind die Blattfedern dieser Blattfederpakete so orientiert, daß sie mit ihren größeren Oberflächenseiten in schräg zur Vertikalen verlaufenden Ebenen liegen und mit ihren zwischen dem jeweils oberen und dem jeweils unteren Ende jeder Blattfeder verlaufenden schmalen Längsseiten bezogen auf die Achse TM radial innen bzw. radial außen liegend vorgesehen sind. Wie Fig. 14 weiterhin zeigt, ist bei jeder Blattfederanordnung 148 das Blattfederpaket 149 parallel zum Blattfederpaket 150 vorgesehen.

Mit 159 ist ein sternartiger Träger bezeichnet, der einstückig mit drei Armen 160 hergestellt ist, die mit ihrer Längserstreckung jeweils radial zur Achse TM verlaufend vorgesehen und um diese Achse gleichmäßig verteilt angeordnet sind. Der Träger 159 befindet sich mit Abstand unter der Halteplatte 145 und dem diese Halteplatte umschließenden Ring 155. An dem freien Ende jedes Armes 160, und zwar an der dortigen Unterseite ist jeweils ein Halteklotz 154 befestigt.

Bezogen auf die Halteklötze 154 radial innen liegend ist an der Unterseite jedes Armes 160 ein vorzugsweise aus einem elastischen Material gefertigter Standfuß 161 befestigt, mit dem der Vibrationsförderer in geeigneter Weise an der Oberseite eines Maschinentisches 162 befestigt werden kann.

An den radial außen liegenden Enden der Arme 160 ist weiterhin eine die Achse TM konzentrisch umschließende ringförmige Abschlußwand 163 befestigt, die von der Oberseite des Maschinentisches 142 bis an die Unterseite des Ringes 155 reicht, aber in Richtung der Achse TM sowohl einen Abstand von der Oberseite des Maschinentisches 162 als auch einen Abstand von der Unterseite des Ringes 155 aufweist. Bei der dargestellten Ausführungsform sind die radiale Länge der Arme 160 und der Durchmesser der kreiszylinderförmigen Abschlußwand 163 so gewählt, daß diese Abschlußwand mit ihrer Außenfläche in etwa fluchtend mit der Außenfläche des Ringes 155 oder aber gegenüber dieser Außenfläche des Ringes 155 geringfügig radial nach innen versetzt liegt. Die Abschlußwand 163, die den die Blattfederanordnungen 148 sowie weitere, noch näher beschriebene Elemente aufnehmenden Raum des Vibrationsförderers unterhalb der Halteplatte 145 und des Ringes 155 nach außen hin abschließt, ist vorzugsweise mehrteilig, d.h. aus mehreren Segmenten bestehend ausgebildet und lösbar an dem Träger 159 bzw. den Armen 160 befestigt, so daß im Bedarfsfall die Abschlußwand 163 entfernt werden kann.

Durch die Blattfederanordnungen 148 ist eine gefederte Vibrationsbewegung in Form einer hin- und hergehenden Drehbewegung um die Achse TM sowohl für die Halteplatte 145 als auch für den Ring 155 möglich.

Innerhalb des von der Abschlußwand 163 umschlossenen Raumes sind in gleichmäßigen Winkelabständen um die Achse TM versetzt drei elektromagnetische Antriebe 164 zur Erzeugung der Vibrations- bzw. Schwingbewegung vorgesehen. Jeder Antrieb 164, der einem Arm 160 benachbart, gegenüber diesem jedoch winkelmäßig um die Achse TM um einen bestimmten Betrag versetzt ist, besteht aus einem eine Magnetspule 165 aufweisenden Magnetkern 166, der an der Unterseite des äußeren Ringes 155 befestigt ist.

Jeder unterhalb der Halteplatte 145 und unterhalb des Ringes 155 vorgesehene Antrieb 164 besitzt weiterhin einen mit dem Magnet 165 bzw. dem Magnetkern 166 zusammenwirkenden Magnetanker 167, der an der Unterseite der Halteplatte 145 befestigt ist. Die Anordnung ist dabei so getroffen, daß zwischen einer Fläche des Magnetkernes 166 und einer benachbarten Fläche des Magnetankers 167 ein ebener Magnetspalt 168 mit einer vorgegebenen Breite gebildet ist, der in einer Ebene parallel zur Achse TM sowie zur Längserstreckung des dem jeweiligen Antriebs 164 benachbarten Armes 160 liegt. Die Anordnung ist weiterhin so getroffen, daß der Magnetanker 167 diesem Arm 160 näher liegt als der mit der Magnetspule 165 versehene Magnetkern 166. Über ein nicht näher dargestelltes äußeres Steuergerät werden die Magnetspulen 165 der Antriebe 164 mit einem sich ändernden Strom, bevorzugt mit einem Wechselstrom beaufschlagt, so daß jeder Antrieb 164 zwischen der Halteplatte 145 und dem Ring 155 eine hin- und hergehende Vibrationskraft in einer Achsrichtung senkrecht zu der genannten Ebene des Magnetspaltes 168 ausübt.

Zwischen jedem einem Arm 160 benachbarten Antrieb 164 und einem weiteren Arm 160 ist an der Unterseite des Ringes 155 eine aus mehreren Einzelmassen 169 bestehende Hilfsmasse 170 vorgesehen. Bei der dargestellten Ausführungsform bestehen diese ebenfalls in dem von der Abschlußwand 163 umschlossenen Raum untergebrachten Hilfsmassen 170 aus quader- bzw. plattenförmigen Einzelmassen 169, die mittels über die Unterseite des Ringes 155 wegstehenden Gewindebolzen 171 mit Muttern 172 gehalten sind. Um mit den Einzelmassen 169 eine möglichst große Änderung des Trägheitsmomentes der Gegenschwingmasse erreichen zu können, sind die Einzelmassen so angeordnet und ausgebildet, daß deren Masseschwerpunkt bezogen auf die Achse TM möglichst weit außen liegt.

Da die Hilfsmassen bezogen auf die Achse TM radial außen liegend vorgesehen sind und außerdem die Gewindebolzen 171 bzw. deren Köpfe an der Oberseite des Ringes 155 und auch die Muttern 172 leicht zugänglich sind, ist nach dem Entfernen der Abschlußwand 163 bzw. der diese Abschlußwand bildenden Segmente eine problemlose Anpassung der Hilfsmassen bzw. des Trägheitsmomentes der Gegenschwingmasse durch Entfernen oder Hinzufügen einer oder mehrerer Einzelmassen möglich.

Die Hilfsmassen 170 bilden insbesondere zusammen mit dem Ring 155 und mit den übrigen, an diesem Ring befestigten Elementen, insbesondere den Magnetspulen 165 und Magnetkernen 166 die Gegenschwingmasse bzw. ein zweites Schwingelement, während die Halteplatte 145 und die an dieser Halteplatte vorgesehenen Teile, insbesondere auch der Topf 141 ein erstes Schwingelement bzw. eine Nutzmasse bilden. Diese Nutzmasse und die Gegenschwingmasse sind unter Berücksichtigung der Federkonstanten der Blattfederpakete 149 und 150 der Blattfedereinrichtungen 148 so aufeinander abgestimmt, daß bei eingeschalteten Antrieben 164 praktisch keine Vibrationskräfte auf den Träger 159 und damit auch den Maschinentisch übertragen werden. Bei dieser Ausführungsform sind die Blattfederpakete 149 und 150 jeweils identisch ausgebildet. Dies bedeutet, daß auch die von den beiden vorgenannten Massen gebildeten Trägheitsmomente gleich sind.

Durch die aus den Einzelmassen 169 bestehenden Hilfsmassen 170 und durch den hiermit möglichen Abgleich der Trägheitsmomente ist es möglich, bei ein und demselben Vibrationsförderer Töpfe 140 mit unterschiedlicher Form, Größe und damit Masse zu verwenden. In der Fig. 12 ist mit unterbrochenen Linien mit 140' ein Topf dargestellt, der sich mit der Unterseite seines Bodens auch über den Ring 155 erstreckt, also diesen Ring nach oben hin abdeckt.

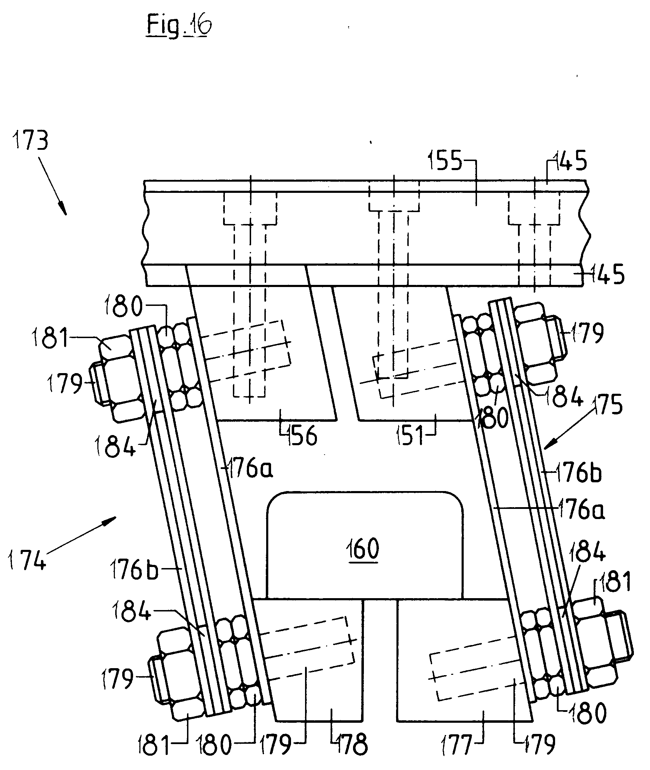

Fig. 16 zeigt in ähnlicher Darstellung wie Fig. 14 eine der wenigstens drei Blattfedereinrichtungen 173 einer weiteren möglichen Ausführungsform des erfindungsgemäßen Vibrationswendelförderers. Die Blattfedereinrichtung 173 besteht aus den beiden Blattfederpaketen 174 und 175, von denen jedes eine Blattfeder 176a und mehrere, paket- bzw. lamellenartig übereinander angeordnete Blattfedern 176b aufweist. Die Blattfedern 176a und 176b des Blattfederpaketes 175 sind mit ihren oberen Enden am Befestigungsklotz 151 der Halteplatte 145 befestigt. Die Blattfedern 176a und 176b des Blattfederpaketes 174 sind mit ihren oberen Enden am Halteklotz 176 des Ringes 155 befestigt. Mit ihren unteren Enden sind die Blattfedern des Blattfederpaketes 175 an einem Halteklotz 177 und die Blattfedern des Blattfederpaketes 174 an einem Halteklotz 178 befestigt. Für jede Blattfedereinrichtung 173 sind somit nicht nur zwei getrennte obere Halteklötze 151 und 156, sondern auch zwei getrennte untere Halteklötze 177 und 178 vorgesehen, welch letztere in geeigneter Weise jeweils einem Arm 160 des sternartigen Trägers 159 befestigt sind, und zwar wiederum an der Unterseite dieses Armes, um bei ausreichender Länge der Blattfedern 176a und 176b eine möglichst niedrige Bauform für den Vibrationsförderer bzw. dessen Schwingsystem zu erreichen. Die Verwendung getrennter Halteklötze 177 und 178 ermöglicht u.a., sämtliche Halteklötze für die unteren und oberen Enden der Blattfedern 176a und 176b identisch auszubilden, so daß die Anzahl der benötigten unterschiedlichen Teile wesentlich reduziert wird.

Wie die Fig. 16 zeigt, sind zur Befestigung der Blattfedern 176a und 176b in den Halteklötzen 177 und 178, aber auch in den Halteklötzen 151 und 156 anstelle der Befestigungsschrauben 152, 153, 157 bzw. 158 Gewindebolzen 179 vorgesehen. Mittels dieser Gewindebolzen und Konter-Muttern 180 ist die Blattfeder 176a jedes Blattfederpaketes 174 bzw. 175 mit ihrem oberen und mit ihrem unteren Ende an den entsprechenden Halteklötzen gehalten, und zwar unmittelbar gegen diese Halteklötze anliegend. Die Blattfedern 176b der Blattfederpakete 174 und 175 sind auf die über die Kontermuttern 180 vorstehenden Enden der Gewindebolzen 179 aufgeschoben und dort mittels der Muttern 181 festgelegt. Diese Ausbildung bietet die Möglichkeit, zur Änderung der Federkonstante eines oder beider Blattfederpakete 174 und 175 die außenliegenden Blattfedern 176b gegen passende Blattfedern mit anderen Federkonstanten auszutauschen und/oder die Anzahl der äußeren Blattfedern 176b zu ändern, ohne daß die Blattfedern 176a gelöst werden, d.h. ohne daß eine völlige Demontage des Schwingsystems erfolgt bzw. ohne daß die Verbindung zwischen den einzelnen Elementen dieses Schwingsystems und dabei insbesondere die Verbindung zwischen der Halteplatte 145 bzw. dem Ring 155 mit dem Träger 149 verlorengeht.

Durch die beschriebene Art der Ausbildung der Federpakete 174 und 175 besteht nun insbesondere auch die Möglichkeit, die Eigenfrequenz des von der Nutzmasse und den zugehörigen Blattfedern gebildeten Schwingsystems und die Eigenfrequenz des von der Gegenschwingmasse gebildeten Schwingsystems insbesondere auch nach dem erfolgten Massenabgleich bzw. Abgleich der Trägheitsmomente so einzustellen, daß diese von dem jeweiligen Trägheitsmoment und von der Federkonstanten der Blattfederpakete 174 bzw. 175 abhängige Eigenfrequenz gleich oder zumindest nahezu gleich der Frequenz der elektromagnetischen Antriebe 164 ist, d.h. im Falle eines Betriebs der Magnetspulen 165 mit Netzfrequenz möglichst gleich dieser Netzfrequenz ist, um so bei geringer Stromaufnahme der Magnetspulen 165 eine möglichst große Förderleistung zu erreichen.

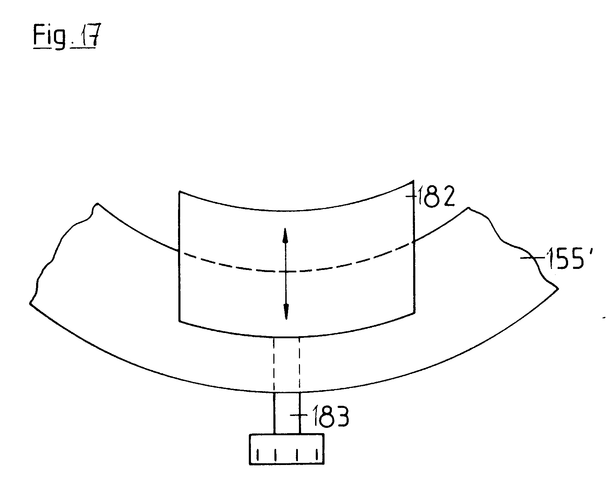

Fig. 17 zeigt eine Ausführung, bei der anstelle des Ringes 155 ein Ring 155' verwendet ist, der an wenigstens zwei um die Achse TM um 180° versetzten Bereichen jeweils ein Segment 182 aufweist, welches durch eine an der Außenseite des Vibrationsförderers frei zugängliche Verstelleinrichtung, beispielsweise durch eine Verstellschraube 183 in einer senkrecht zur Achse TM liegenden Ebene radial zu dieser Achse verstellbar ist, um auf diese Weise einen Abgleich des dynamischen Trägheitsmomentes für das zweite Schwingelement bzw. für die Gegenmasse zu erreichen. Dieses verstellbare Segment 182 kann zusätzlich zu den Hilfsmassen 170 vorgesehen sein, so daß dann in diesem Fall durch Änderung der Hilfsmassen 170 ein Abgleich des Trägheitsmomentes der Gegenmasse in Schritten und durch Verstellen des Segmentes 182 ein stufenloser Abgleich des Trägheitsmomentes möglich ist. Grundsätzlich ist es aber auch möglich, die Hilfsmasse 117 jeweils an einem Segment 182 zu befestigen.

Vorstehend wurde davon ausgegangen, daß der Abgleich des dynamischen Trägheitsmomentes durch Änderung der Hilfsmasse 117 und/oder durch Einstellen des Segmentes 182, ggf. durch Austausch der Blattfedern 176b bzw. durch Änderung der Federkonstanten der Blattfederpakete 174 und 175 zur Minimierung des durch die Magnetspulen 165 fließenden Stromes.

Abweichend hiervon besteht aber auch die Möglichkeit, unterschiedliche Größen bzw. Massen der verwendeten Töpfe 140 dadurch zu kompensieren, daß lediglich die der Nutzmasse zugeordneten Federelemente bzw. Blattfederpakete 175 hinsichtlich ihrer Federkonstanten beispielsweise durch Auswechseln der Blattfedern 176b und/oder durch Änderung der Anzahl dieser Blattfedern so eingestellt wird, daß die Eigenfrequenz der den jeweiligen Topf 140 einschließenden Nutzmasse gleich der Eigenfrequenz der Gegenschwingmasse ist. Bei dieser Ausführung des Vibrationsförderer sind dann die Gegenschwingmasse bzw. das von dieser Gegenschwingmasse gebildete dynamische Trägheitsmoment, die Nutzmasse bzw. das von dieser gebildete dynamische Trägheitsmoment und die zugehörigen Federelemente bzw. Blattfederpakete 174 und 175 so gewählt, daß bei gleicher Eigenfrequenz für beide Massen zumindest die Blattfederpakete 175 für den größten, zur Verwendung vorgesehenen Topf 140, d.h. für den das größte Trägheitsmoment aufweisenden Topf 140 eine genügend hohe Anzahl von Blattfedern 176b aufweisen. Bei Verwendung von kleineren Töpfen 140 erfolgt dann der Abgleich durch Reduzierung der Anzahl der Blattfeder 176b bei den Blattfederpaketen 175, und zwar so, daß die Eigenfrequenz der Nutzmasse trotz eines kleineren Topfes bzw. eines Topfes mit kleinerem Trägheitsmoment wieder gleich der Eigenfrequenz der Gegenschwingmasse ist. Zumindest in einem Bereich, in dem ein Abgleich durch Änderung der Anzahl der Blattfedern 176b der Blattfederpakete 175 möglich ist, erfolgt keine Änderung der Gegenschwingmasse bzw. der zugehörigen Blattfederpakete 174.

Bevorzugt sind die Blattfedern 176b durch im Bereich der Gewindebolzen 179 vorgesehene Zwischenplatten 184 voneinander beabstandet, so daß beim Schwingen ein Reiben der Blattfedern 176 aneinander verhindert ist. Ähnliche Zwischenplatten können auch bei den Blattfederpaketen 149 und 150 vorgesehen sein.

Die Erfindung wurde voranstehend an Ausführungsbeispielen beschrieben. Es versteht sich, daß Änderungen sowie Abwandlungen im Rahmen der Ansprüche möglich sind.

## Patentansprüche

1. Vibrationswendelförderer-System für Bauelemente (144), mit einem Schwingsystem für Töpfe (140), die jeweils an ihrer Innenfläche eine wendelartige Förderstrecke (143) um eine vertikale Topf-Mittelachse (TM) des Topfes (140) für die Bauelemente bilden, wobei das Schwingsystem ein erstes, eine Nutzmasse bildendes und den Topf (140) aufweisendes Schwingelement (145), ein zweites, eine Gegenschwingmasse bildendes Schwingelement (155) sowie Federanordnungen (149, 150) aufweist, mit denen das erste und das zweite Schwingelement (145; 155, 155') mit einem Basiselement oder Träger (159) verbunden sind, mit welchem das Schwingsystem an einem Maschinengestell (162) befestigbar ist, wobei das Schwingsystem weiterhin einen zwischen den beiden Schwingelementen (145, 155) wirkenden Antrieb (164) aufweist, der eine gegenläufige, oszillierende Dreh-Schwing-Bewegung der Schwingelemente um die vertikale Topf-Mittelachse (TM) erzeugt, wobei diese Dreh-Schwing-Bewegung bei dem ersten Schwingelement (145) eine Bewegungskomponente in einer Förderrichtung der Förderstrecke (143) des Topfes (140) aufweist, und wobei die Federanordnungen (148, 149, 174, 175) mit ihren Federkonstanten auf die Massenträgheitsmomente der Nutzmasse und der Gegenschwingmasse derart abstimmbar sind, daß sich für das erste Schwingelement (145) und das zweite Schwingelement (155) jeweils eine Eigenfrequenz ergibt, die gleich oder in etwa gleich der Frequenz des Antriebs ist, **dadurch gekennzeichnet**, daß für vorgegebene Töpfe (140) unterschiedlicher Masse und bei einer Abstimmung nur der der Nutzmasse zugeordneten Federanordnungen (149, 175) das Massenträgheitsmoment der Gegenschwingmasse gleich demjenigen Massenträgheitsmoment ist, welches die Nutzmasse bei Verwendung des Topfes (140) mit der größten Masse aufweist.

2. Wendelförderer-System nach Anspruch 1, dadurch gekennzeichnet, daß die Federanordnungen (175) zumindest der Nutzmasse Blattfedern aufweisen, und daß bei Verwendung des Topfes (140) mit der größten Masse die Blattfedern der Nutzmasse jeweils ein Blattfederpaket (149, 175) mit einer Vielzahl von Blattfedern bildet.

3. Wendelförderer-System nach einem der Ansprüche 1 oder 2, dadurch gekennzeichnet, daß das zweite Schwingelement ein die Mittelachse (TM) oder das erste Schwingelement (145) umschließender Ring (155) ist.

4. Wendelförderer-System nach einem der Ansprüche 1 - 3, dadurch gekennzeichnet, daß das erste Schwingelement eine Halteplatte (145) ist, an der das die Förderstrecke (143) aufweisende Element (140) befestigt ist.

5. Wendelförderer-System nach einem der Ansprüche 1 - 4, dadurch gekennzeichnet, daß um die Mittelachse (TM) in gleichen Winkelabständen verteilt wenigstens drei jeweils wenigstens zwei Federelemente (149, 150) aufweisende Federanordnungen (148) vorgesehen sind, wobei die Federelemente bevorzugt Blattfedern oder Blattfederpakete sind, und/oder daß um die Mittelachse (TM) gleichmäßig verteilt wenigstens zwei Antriebe (164) vorgesehen sind.

6. Wendelförderer-System nach einem der Ansprüche 1 - 5, dadurch gekennzeichnet, daß der Antrieb (164) jeweils aus einem eine Magnetspule (165) aufweisende Magnetkern (166) und einem Magnetanker (167) besteht, und daß die Elemente jedes Antriebs (164) derart an dem ersten Schwingelement (145) sowie an dem zweiten Schwingelement (155) befestigt sind, daß zwischen dem Magnetkern (166) und dem Magnetanker (167) ein Magnetspalt (168) verbleibt, wobei vorzugsweise der die Magnetspule (165) tragende Magnetkern an dem zweiten Schwingelement (155) und der Magnetanker (167) an dem ersten Schwingelement (145) befestigt sind.

7. Wendelförderer-System nach Anspruch 6, dadurch gekennzeichnet, daß der Magnetspalt (168) jedes Antriebes (164) in einer Ebene angeordnet ist, die parallel oder in etwa parallel zur Mittelachse (TM) liegt, von dieser Mittelachse jedoch einen Abstand besitzt.

8. Wendelförderer-System nach einem der Ansprüche 1 - 7, dadurch gekennzeichnet, daß bei wenigstens drei um die Mittelachse (TM) gleichmäßig verteilten Federanordnungen (148) zwischen zwei solchen Federanordnungen (148) jeweils ein Antrieb (164) sowie ein mit einer veränderbaren Hilfsmasse (170) versehener Bereich vorgesehen sind.

9. Wendelförderer-System nach einem der Ansprüche 1 - 8, dadurch gekennzeichnet, daß das Basiselement von einem sternartigen Träger (159) gebildet ist, der wenigstens drei Arme (160) aufweist, die bezogen um die Mittelachse (TM) gleichmäßig verteilt vorgesehen sind und jeweils mit ihrer Längserstreckung radial zu dieser Mittelachse angeordnet sind, und daß am Ende jedes Armes (160) die Federelemente (149, 150) befestigt sind, wobei vorzugsweise jeweils ein Antrieb (164) einem Arm (160) benachbart vorgesehen ist, und daß der Magnetspalt (168) jedes Antriebs (164) in einer Ebene parallel zur Längserstreckung des jeweils benachbarten Armes (160) angeordnet ist.

10. Wendelförderer-System nach einem der Ansprüche 1 - 9, dadurch gekennzeichnet, daß der Masseschwerpunkt der Nutzmasse und der Gegenschwingmasse mit der Mittelachse (TM) zusammenfällt,
und/oder daß das zweite Schwingelement (155') in gleichmäßigen Abständen um die Mittelachse (TM) verteilt wenigstens zwei Massenelemente bildende Segmente (182) besitzt, die radial zur Mittelachse (TM) verstellbar sind
und/oder daß die Federanordnungen (174, 175) teilweise feste, die Elemente des Schwingsystems relativ zueinander haltende Federelemente (176a) sowie teilweise entfernbare und/oder austauschbare Federelemente (176b) sind,
und/oder daß bei von Blattfederpaketen (149, 150, 174, 175) gebildeten Federanordnungen die Blattfedern in jedem Blattfederpaket voneinander beabstandet sind.

## Claims

1. Vibratory screw conveyor for construction elements (144), with an oscillatory system for pots (140), which in each case form, on their inner surface, a helix-like transportation track (143) around a vertical pot middle axis (TM) of the pot (140) for the construction elements; with the oscillatory system having a first oscillation element (145) which forms a useful mass and has the pot (140), a second oscillation element (155) which forms a counter oscillatory mass, as well as spring arrangements (149, 150), with which the first and second oscillation elements (145; 155, 155') are connected with a base element or carrier (159) with which the oscillatory system can be fixed onto a machine frame (162); with the oscillatory system furthermore having a drive (164) acting between the two oscillation elements (145, 155), this drive creating a counterwise, oscillating rotary vibration movement of the oscillation elements around the vertical pot middle axis (TM), with this rotary vibration movement having, in the case of the first oscillation element (145), a movement component in a conveyor direction of the transportation track (143) of the pot (140) and with the spring arrangements (148, 149, 174, 175) with their spring constants being adjustable to the mass moments of inertia of the useful mass and of the counter oscillatory mass in such a way that a natural frequency results in each case for the first oscillation element (145) and the second oscillation element (155) this being the same or approximately the same as the frequency of the drive, characterised by the fact that for specified pots (140) of varying mass, and with adjustment of only those spring arrangements (149, 175) assigned to the useful mass, the mass moment of inertia of the counter oscillatory mass is equal to that mass moment of inertia which the useful mass shows when the pot (140) with the greatest mass is used.

2. Screw conveyor system in accordance with claim 1, characterised by the fact that the spring arrangements (175) of at least the useful mass have leaf springs, and that when the pot (140) with the greatest mass is used, the leaf springs of the useful load forms, in each case, a leaf spring assembly (149, 175) with numerous leaf springs.

3. Screw conveyor system in accordance with one of the claims 1 or 2, characterised by the fact that the second oscillation element is a ring (155) which encloses the middle axis (TM) or the first oscillation element (145).

4. Screw conveyor system in accordance with one of the claims 1 to 3, characterised by the fact that the first oscillation element is a retaining plate (145), on which is fixed the element (140) which has the transportation track (143).

5. Screw conveyor system in accordance with one of the claims 1 to 4, characterised by the fact that, distributed around the middle axis (TM) at equal angular distances, at least three spring arrangements (148) are provided, which in each case have at least two spring elements (149, 150), with the spring elements preferably being leaf springs or leaf spring assemblies, and/or that at least two drives (164) are provided, evenly distributed around the middle axis.

6. Screw conveyor system in accordance with one of the claims 1 to 5, characterised by the fact that the drive (164) consists in each case of a magnet core (166) which has a magnetic coil (165), and a magneto inductor (167), and that the elements of each drive (164) are fixed in such a way to the first oscillation element (145) as well as to the second oscillation element (155) that a magnetic gap (168) remains between the magnet core (166) and the magneto inductor (167), with, preferably, the magnet core carrying the magnet coil (165) being fixed to the second oscillation element (155), and the magneto inductor (167) being fixed to the first oscillation element (145).

7. Screw conveyor system in accordance with claim 6, characterised by the fact that the magnetic gap (168) of each drive (164) is arranged in a plane which lies parallel or approximately parallel to the middle axis (TM), but which lies at a distance from this middle axis.

8. Screw conveyor system in accordance with one of the claims 1 to 7, characterised by the fact that in the case of at least three spring arrangements (148), evenly distributed around the middle axis (TM), provided between two such spring arrangements (148) there is, in each case, one drive (164), as well as an area equipped with an adjustable auxiliary mass (170).

9. Screw conveyor system in accordance with one of the claims 1 to 8, characterised by the fact that the base element is formed by a star-like carrier (159) which has at least three arms (160), which are provided evenly distributed in relation to the middle axis (TM) and which in each case are arranged with their longitudinal extension radial to this middle axis, and that fixed at the end of each arm (160) are the spring elements (149, 150), with, preferably, in each case one drive (164) being provided adjacent to an arm (160) and that the magnet gap (168) of each drive (164) is located in a plane parallel to the longitudinal extension of the adjacent arm (160) in each case.

10. Screw conveyor system in accordance with one of the claims 1 to 9, characterised by the fact that the mass centre of gravity of the useful mass and of the counter oscillatory mass coincides with the middle axis (TM), and/or that the second oscillation element (155') has segments (182), distributed at equal distances around the middle axis (TM) and forming at least two mass elements, which are adjustable radially to the middle axis and/or that the spring arrangements (174/175) are in part fixed spring elements (176a) holding the elements of the oscillatory system relative to one another, as well as in part removable and/or exchangeable spring elements (176b), and/or that in the case of spring arrangements formed by leaf spring assemblies (149, 150, 174, 175), the leaf springs in each leaf spring assembly are distanced from one another.

## Revendications

1. Convoyeur vibratoire pour des éléments de construction (144), pourvu d'un système oscillant pour des pots (140), qui forment sur leur surface interne un parcours de transport (143) hélicoïdal autour d'un axe médian vertical (TM) du pot (140) pour les éléments de construction, le système oscillant présentant un premier élément oscillant (145) formant une masse active et présentant le pot (140) et un second élément oscillant (155) formant une masse oscillante opposée de même que des dispositifs élastiques (149, 150), auquels sont connectés les premier et second éléments oscillants (145; 155, 155') au moyen d'un élément de base ou d'un support (159), grâce auquel le système oscillant peut être fixé sur un bâti de machine (162), le système oscillant présentant en outre un entraînement (164) actif entre les deux éléments oscillants (145, 155), qui produit un mouvement oscillant et rotatif opposé des éléments oscillants autour de l'axe médian vertical (TM) du pot, ledit mouvement oscillant et rotatif dans le cas du premier élément oscillant (145) présentant une composante de mouvement dans la direction de transport du parcours de transport (143) du pot (140), et les dispositifs élastiques (148, 149, 174, 175) avec leur constante élastique pouvant être accordés aux moments d'inertie de masse de la masse active et de la masse oscillante opposée de telle manière que pour le premier élément oscillant (145) et le second élément oscillant (155) existe une fréquence propre, qui est égale ou plus ou moins égale à la fréquence de l'entraînement, **caractérisé en ce que** pour des pots (140) donnés de masse différente et en adaptant uniquement les dispositifs élastiques (149, 175) adjoints à la masse active, le moment d'inertie de masse de la masse oscillante opposée est égal au moment d'inertie de masse qui présente la masse active en cas d'utilisation du pot (140) avec la plus grande masse.

2. Convoyeur vibratoire suivant la revendication 1, caractérisé en ce que au moins les dispositifs élastiques (175) de la masse active présentent des ressorts à lames et en ce que en cas d'utilisation du pot (140) avec la plus grande masse, les ressorts à lames de la masse active forment un ensemble de ressorts à lames (149, 175) pourvu d'une multitude de ressorts à lames.

3. Convoyeur vibratoire suivant la revendication 1 ou 2, caractérisé en ce que le second élément oscillant est un anneau (155) entourant l'axe médian (TM) ou le premier élément oscillant (145).

4. Convoyeur vibratoire suivant l'une ou l'autre des revendications 1 à 3, caractérisé en ce que le premier élément oscillant est une plaque de retenue (145) sur laquelle est fixé l'élément (140) présentant le parcours de transport (143).

5. Convoyeur vibratoire suivant l'une ou l'autre des revendications 1 à 4, caractérisé en ce que autour de l'axe médian (TM) sont prévus à écart angulaire égal au moins trois dispositifs élastiques (148) présentant au moins deux éléments élastiques (149, 150), lesdits éléments élastiques étant préférentiellement des ressorts à lames ou des ensembles de ressorts à lames, et/ou en ce que autour de l'axe médian (TM) sont prévus à distance régulière au moins deux entraînements (164).

6. Convoyeur vibratoire suivant l'une ou l'autre des revendications 1 à 5, caractérisé en ce que l'entraînement (164) se compose d'un noyau d'aimant (166) présentant une bobine d'électro (165) et d'une armature (167) et en ce que les éléments de chaque entraînement (164) sont fixés de telle façon sur le premier élément oscillant (145) et sur le second élément oscillant (155) que entre le noyau d'aimant (166) et l'armature (167) existe un entrefer (168), le noyau aimanté portant la bobine d'électro (165) étant préférentiellement fixé sur le second élément oscillant (155) et l'armature (167) étant préférentiellement fixée sur le premier élément oscillant (145).

7. Convoyeur vibratoire suivant la revendication 6, caractérisé en ce que l'entrefer (168) de chaque entraînement (164) est disposé dans un plan qui est parallèle ou plus ou moins parallèle à l'axe médian (TM) mais qui est néanmoins éloigné de l'axe médian.

8. Convoyeur vibratoire suivant l'une ou l'autre des revendications 1 à 7, caractérisé en ce que dans le cas d'au moins trois dispositifs élastiques (148) répartis régulièrement autour de l'axe médian (TM) sont prévus entre deux dispositifs élastiques (148) de ce type un entraînement (164) et une zone pourvue d'une masse auxiliaire (170) variable.

9. Convoyeur vibratoire suivant l'une ou l'autre des revendications 1 à 8, caractérisé en ce que l'élément de base est formé par un support (159) en étoile, qui présente au moins trois bras (160), qui sont répartis de façon régulière autour de l'axe médian (TM) et qui sont disposés avec leur extension longitudinale radialement par rapport à cet axe médian, et en ce que à l'extrémité de chaque bras (160) sont fixés les éléments élastiques (149, 150), un entraînement (164) étant préférentiellement prévu à proximité d'un bras (160) et en ce que l'entrefer (168) de chaque entraînement (164) est disposé dans un plan parallèlement à l'extension longitudinale du bras (160) voisin.

10. Convoyeur vibratoire suivant l'une ou l'autre des revendications 1 à 9, caractérisé en ce que le centre de gravité de masse de la masse active et de la masse oscillante opposée coïncide avec l'axe médian (TM),
et/ou en ce que le second élément oscillant (155') présente à intervalles réguliers autour de l'axe médian (TM) au moins deux segments (182) formant des éléments de masse, qui peuvent être déplacés radialement par rapport à l'axe médian (TM),
et/ou en ce que les dispositifs élastiques (174, 175) sont des éléments élastiques (176a) partiellement fixes maintenant l'un par rapport à l'autre les éléments du système oscillant de même que des éléments élastiques (176b) pouvant être partiellement enlevés et/ou remplacés,
et/ou en ce que dans les dispositifs élastiques formés par les ensembles de ressorts à lames (149, 150, 174, 175), les ressorts à lames de chaque ensemble de ressorts à lames sont éloignés l'un de l'autre.
